(19) Europäisches Patentamt
European Patent Office
Office européen des brevets

(11) EP 0 709 415 B1

(12) **EUROPEAN PATENT SPECIFICATION**

(45) Date of publication and mention of the grant of the patent:
**25.07.2001 Bulletin 2001/30**

(21) Application number: **95116719.6**

(22) Date of filing: **24.10.1995**

(51) Int Cl.⁷: **C08G 18/62**, C09D 133/06, C09D 175/04, B05D 7/00 // (C09D133/06, 161:28), (C09D175/04, 161:28)

# (54) Substrat coated by a base-coat and a clear coat, method of film-forming and coated articles

Substrat beschichtet mit Grundierung und Klarlack, Verfahren zur Filmherstellung sowie beschichtete Gegenstände

Substrat revêtu d' un vernis de fond et un vernis clair, procédé de formation d'un film et produits revêtus

(84) Designated Contracting States:
**BE CH DE ES FR GB IT LI NL SE**

(30) Priority: **28.10.1994 JP 28921894**

(43) Date of publication of application:
**01.05.1996 Bulletin 1996/18**

(73) Proprietor: **NOF CORPORATION**
**Tokyo (JP)**

(72) Inventors:
- **Mashita, Mitsuyuki**
  **Yokohama-shi, Kanagawa-ken (JP)**
- **Shibamoto, Kenji**
  **Kamakura-shi, Kanagawa-ken (JP)**
- **Katagiri, Manabu**
  **Saitama-ken (JP)**
- **Mizuno, Shigeyuki**
  **Yokohama-shi, Kanagawa-ken (JP)**
- **Ogura, Kuniyoshi**
  **Yokohama-shi, Kanagawa-ken (JP)**

(74) Representative:
**Gille Hrabal Struck Neidlein Prop Roos**
**Patentanwälte**
**Brucknerstrasse 20**
**40593 Düsseldorf (DE)**

(56) References cited:
**EP-A- 0 029 595**
**EP-A- 0 071 813**
**DE-A- 2 253 191**
**US-A- 4 374 954**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

BACKGROUND OF THE INVENTION

1. Field of the Invention

The present invention relates to a novel curable base - coatcomposition, a method of film-forming by utilizing the composition and a coated article.

2. Description of the Prior Art

Two coat one bake method for forming a cured film comprises applying a clear coat on a base coat containing color pigments and /or bright pigments via a wet-on-wet technique and simultaneously baking and curing is generally known as a method of forming a cured film on outer boad of an automobile body and the like. The conventional coating material used in the method of forming the cured film is generally a polyol-melamine type coating material in which a polyol of a main resin is cured with an amino resin in both a base coat and a clear coat. The conventional coating material is known and widely used in an industrial coating field.

In recent North America, the polyol-melamine type coating material, however, is rapidly etched and damaged by acid rain. The phenomena is caused by hydrolysis of an ether bond of a crosslinked structure formed in the polyol-melamine type coating material by the acid rain and it is a substantial defect of the polyol-melamine type coating material.

To improve the problem, the present applicant already suggested a new curing technology that a resin containing epoxy groups was cured by an acid curing agent blocked chemically (Laid Open Japanese Patent Applications Hei 4-218561, 4-227763 and 5-320529).

In an application of the curing technology to the clear coat, the clear coat is not only excellent in acid rain resistance, because the clear coat does not substantially contain the ether bond and the amino bond in the crosslinked structure which are easily hydrolyzed with an acid, but also excellent in stain resistance and weathering resistance. Further, the clear-coat composition is more effective in the preparation of high solids coating composition, because the main resin does not contain functional groups having a hydrogen bond property such as carboxyl group, hydroxyl group and the like.

However, when the clear-coat composition is applied and cured on the former type base coats of polyol-melamine via a wet-on-wet technique, the excellent cured film properties can be obtained in usual use environment, but some cured film properties are insufficient in severest environment such as immersion in boiling water and immersion in a mixed solvent containing ethanol and non-lead gasoline.

Thus, there are not the thermosetting base-coat composition, the method of film-forming and coated articles until now, which can sufficiently exert the excellent characteristics of the thermosetting clear-coat composition comprising the resin containing epoxy groups and the acid curing agent blocked chemically, in severest environment.

When the former polyol-melamine clear-coat composition is applied and cured by two coat one bake method of a wet-on-wet technique, the excellent cured film properties can be obtained in usual use environment, but chipping resistance is still insufficient, which is a property to improve a chipping phenomena that the film coated on the outer body of the automobile is damaged and peeled off by high speed collision of small stones which the automobile flies at high speed running. Until now, the investigation of the chipping resistance by improving the base coat has not been performed and the chipping resistance has been improved by adding an oblate pigment or a polyurethane resin into an intermediate coat. But, the peeled area is increased by adding the oblate pigment, the compatibility is decreased by adding the polyurethane resin, and the appearance becomes bad with the decrease of the compatibility.

Such peeling problem of the chipping resistance is attributed to little adhesive active points between the former polyol-melamine type base coat and the curable clear coat in cross linking. There are not the thermosetting base-coat composition, the method of film-forming and coated articles until now, which can sufficiently exert the excellent characteristics of the thermosetting clear-coat composition.

As the conventional thermosetting base-coat composition, there is that comprising an acrylic polymer having carboxyl groups and a curing agent having epoxy groups as essential components, and optionally a polyol, a melamine, a blocked isocyanurate and an acid-epoxy curing catalyst (Laid Open Japanese Patent Application Hei 6 - 248234, and 6 - 248230). But, the composition has a defect that the storage stability is bad, because the composition comprises the acrylic polymer having carboxyl groups.

One of the other conventional thermosetting base-coat compositions is that comprising (1) a compound or polymer having epoxy groups and (2) a compound or polymer having at least one of functional groups such as carboxyl group and hydroxyl group, which react with the epoxy group, as essential components (Laid Open Japanese Patent Application Shou 60 - 248261). But, the composition has a defect that the pot life is short and the water resistance is

bad, because the compound (2) certainly reacts with the epoxy group of the compound (1).

Further, the thermosetting base-coat composition comprising a low molecular polyepoxide, a low molecular polyfunctional compound having hydroxy groups, an acid anhydride curing agent and an onium salt curing catalyst (Laid Open Japanese Patent Application Shou 63 - 84674 and 63 - 84673), that comprising a resin having hydroxyl groups and carboxyl groups, an alicyclic polyepoxide curing agent and a curing catalyst ((Laid Open Japanese Patent Application Hei 4 - 170485) and that comprising an acrylic resin having hydroxyl groups and carboxyl groups, an acrylic resin having carboxyl groups and an acrylic resin having hydroxyl groups and epoxy groups ((Laid Open Japanese Patent Application Hei 6-128446) are known. But, these compositions have a defect that the pot life is short and the water resistance is bad, because all the compositions are acid-epoxy group reaction types.

SUMMARY OF THE INVENTION

The present invention accordingly has an object to provide curable base - coat compositions which sufficiently exert the excellent characteristics of curable clear-coat compositions. Another object of the invention is to provide methods of forming films in combination with the curable base-coat composition and the curable clear-coat composition and to provide coated articles prepared by utilizing the methods of film-forming.

Extensive investigations undertaken by the present inventors with the objects described above lead to a discovery that the objects can be achieved by a curable base-coat composition comprising, (1) a resin component essentially consisting of a polymer of an ethylenically unsaturated monomer having certain epoxy equivalents, certain hydroxyl values, certain glass transition temperatures and certain weight average molecular weights, (2) a curing agent having two or more functional groups in the molecular which can react with the hydroxyl groups of the resin component (1), (3) a Lewis acid catalyst, and (4) a pigment selected from the group consisting of a color pigment and a bright pigment, in result of paying attention to that the curable clear coat has a small amount of adhesive active points to the conventional type polyol-melamine base coat in heat curing. The curable base-coat composition can have the adhesive active points to the curable clear-coat compositions and the excellent cured film properties can be obtained.

The present invention was completed on the basis of

1. A substrate coated by a base-coat and a clear coat, comprising a curable clear coat coated by a wet - on - wet technique on a curable base-coat, wherein the base coat comprises

    (1) a resin component essentially consisting of a polymer of an ethylenically unsaturated monomer having 500 to 4,000 of an epoxy equivalent, 10 to 200 of a hydroxyl value, - 30 to 80 °C of a glass transition temperature and 3,000 to 150,000 of a weight average molecular weight,
    (2) a curing agent having two or more functional groups in the molecule which can react with the hydroxyl groups of the resin component (1),
    (3) a Lewis acid catalyst, and
    (4) a pigment selected from the group consisting of a color pigment and a bright pigment

    and the clear coat comprises an acid curing agent blocked chemically and a resin containing an epoxy group, and

2. A substrate coated by a base-coat and a clear coat, comprising a curable clear coat coared by a wet - on - wet technique on a curable base-coat, wherein the base coat comprises

    (1) a resin component essentially consisting of a polymer of an ethylenically unsaturated monomer having 500 to 4,000 of an epoxy equivalent, 10 to 200 of a hydroxyl value, - 30 to 80 °C of a glass transition temperature and 3,000 to 150,000 of a weight average molecular weight,
    (2) a curing agent having two or more functional groups in the molecule which can react with the hydroxyl groups of the resin component (1),
    (3) a Lewis acid catalyst, and
    (4) a pigment selected from the group consisting of a color pigment and a bright pigment;

    and the clear coat is selected from a polyol melamine type composition, in which the polyol of a main resin is cured with an amino resin, and a polyol-melamine-polyisocyanate type, in which a polyisocyanate compound or a blocked compound thereof is used as a curing agent.

Further, a method of film-forming of the invention which comprises : coating the curable base-coat composition described above on a substrate and coating a curable clear - coat composition comprising an acid curing agent blocked chemically and a resin containing an epoxy group on the base coat via a wet-on-wet technique. Furthermore, a method

of film-forming of the invention which comprises: coating the curable base-coat composition described above on a substrate and coating a curable clear-coat composition selected from the group consisting of a polyol-melamine type, in which a polyol of a main resin is cured with an amino resin, and a polyol-melamine-polyisocyanate type in which a polyisocyanate compound or a blocked compound thereof is used as a curing agent, on the base coat via a wet-on-wet technique.

Also, the invention provides articles coated by the methods of film-forming described above.

Other and further objects, features and advantages of the invention will appear more fully from the following description.

## DETAILED DESCRIPTION OF THE INVENTION

The invention will be explained in detail in the following.

The resin component (1) essentially consisting of the polymer of the ethylenically unsaturated monomer used in the present curable base-coat compositions has epoxy groups of 500 to 4,000, preferably 700 to 3,000 as an epoxy equivalent.

The epoxy groups act as chemical adhesive points to the curable clear-coat compositions. When the resin component (1) have more than 4,000 of an epoxy equivalent, the chemical adhesive active points does not sufficiently exist and the desired cured film properties are not obtained.
When the resin component (1) has less than 500 of an epoxy equivalent, the additional reaction among the epoxy groups was easily produced by reacting with each other and the cured film properties are decreased.

The resin component (1) has hydroxyl groups of 10 to 200, preferably 20 to 100, as a hydroxyl value.

The hydoxyl groups react with the curing agent (2) to form a crosslinked structure and to exert cured film properties of the base coat. When the hydroxyl value is more than 200, the curing occures in excess level. When the hydroxyl value is less than 10, the curing is not sufficiently performed and the desired film properties are not obtained.

The introduction of epoxy groups in the resin component essentially consisting of the polymer of the ethylenically unsaturated monomer, for example, can be performed by copolymerizing an ethylenically unsaturated monomer having one or more epoxy groups and the other ethylenically unsaturated monomer. Examples of the ethylenically unsaturated monomer having one or more epoxy groups include glycidyl acrylate, glycidyl methacrylate, β-methylglycidyl acrylate, β-methylglycidyl methacrylate, 3,4-epoxycyclohexyl methyl acrylate, 3,4-epoxycyclohexyl methyl methacrylate, allylglycidyl ether, methallylglycidyl ether, N-glycidyl acrylic amide and glycidyl vinylsulfonate. The ethylenically unsaturated monomers having one or more epoxy groups may be utilized singly or as a combination of two or more kinds.

The introduction of hydroxyl groups in the resin component essentially consisting of the polymer of the ethylenically unsaturated monomer, for example, can be performed by copolymerizing an ethylenically unsaturated monomer having one or more hydroxyl groups and the other ethylenically unsaturated monomer. Examples of the ethylenically unsaturated monomer having one or more hydroxyl groups include 2-hydroxyethyl acrylate, 2-hydroxyethyl methacrylate , 2 - hydroxylpropyl acrylate , 2 - hydroxypropyl methacrylate, 4-hydroxybutyl acrylate, 4-hydroxybutyl methacrylate, N-methylol acrylic amide and ε-caprolactone-additional compounds thereof. The ethylenically unsaturated monomers having one or more hydroxyl groups may be utilized singly or as a combination of two or more kinds.

The other ethylenically unsaturated monomer usually means a monomer having a non-reactive functional group. Examples of the other ethylenically unsaturated monomer include methyl acrylate, methyl methacrylate, ethyl acrylate, ethyl methacrylate, n-propyl acrylate, n-propyl methacrylate , isopropyl acrylate , isopropyl methacrylate, n-butyl acrylate, n-butyl methacrylate, isobutyl acrylate, isobutyl methacrylate, cyclohexyl acrylate, cyclohexyl methacrylate, 2-ethylhexyl acrylate, 2-ethylhexyl methacrylate, lauryl methacrylate, stearyl methacrylate, phenyl acrylate, phenyl methacrylate, benzyl acrylate, benzyl methacrylate, tetra - cyclododecyl acrylate, tetracyclododecyl methacrylate, norbornyl acrylate, stylene, α - methyl stylene, vinyl toluene , dialkyl fumarate , dialkyl itaconate, acrylonitrile, methacrylonitrile, vinyl acetate and vinyl propionate. The other ethylenically unsaturated monomer can be utilized to adjust a glass transition temperature of the resin component essentially consisting of the polymer of the ethylenically unsaturated monomer.

In copolymerizing of the ethylenically unsaturated monomer having one or more epoxy groups and the other ethylenically unsaturated monomer, the ethylenically unsaturated monomer having one or more hydroxyl groups can be utilized as the other ethylenically unsaturated monomer. In copolymerizing of the ethylenically unsaturated monomer having one or more hydroxyl groups and the other ethylenically unsaturated monomer, the ethylenically unsaturated monomer having one or more epoxy groups can be utilized as the other ethylenically unsaturated monomer.

The other ethylenically unsaturated monomers may be utilized singly or as a combination of two or more kinds.

The resin component (1) has - 30 to 80 °C, preferably - 20 to 80 °C, more preferably - 20 to 50 °C of a glass transtion temperature. When the glass transition temperature is less than - 30 °C, the sufficient film hardness is not obtained. When the glass transition temperature is more than 80 °C, the film is fragile and the mechanical strength is

decreased. The glass transition temperature in the invention is a value calculated by the following FOX formula.

$$1/Tg = \Sigma\ (mi\ /\ Tgi)$$

Wherein Tg is a glass transition temperature of a polymer of an ethylenically unsaturated monomer, mi is weight ratio of monomer i in the polymer, and Tgi is a glass transition temperature of a homopolymer of monomer i.
The resin component (1) has 3,000 to 150,000, preferably 5,000 to 100,000 of a weight average molecular weight. When the weight average molecular weight less than 3,000, the curing is not sufficiently performed and the desired cured film properties are not obtained. When the weight average molecular weight is more than 150,000, the applying is difficult because of high viscosity of the resin itself.
The weight average molecular weight means that reduced with polystylene measured by gel permeation chromatography.
The resin component essentially consisting of the polymer of the ethylenically unsaturated monomer is easily produced by radical copolymerizing the ethylenically unsaturated monomer having one or more epoxy groups and ethylenically unsaturated monomer having one or more hydroxyl groups, and, optionally, the other ethylenically unsaturated monomer. As the methods of copolymerization, conventional methods such as a solution polymerization, dispersion polymerization , suspension polymerization and emulsion polymerization are used.
The resin component (1) may utilized by mixing two or more polymers of the ethylenically unsaturated monomer, as long as the resin component (1) is in the range of claim 1 with respect to the epoxy equivalent, the hydroxyl value, the glass transition temperature and the weight average molecular weight.
The resin component (1) may be utilized singly or as a combination of two or more kinds.
Examples of functional group of the curing agent (2), which can react with the hydroxyl groups of the resin component (1), include methylol group, alkoxyalkyl group, alkoxysilane group, alkoxyamide group, isocyanate group, carbamate group, adiponitrile group, ester group, lactone ring and acid anhydride ring.
The curing agent has two or more, preferably 2 to 50, more preferably 2 to 6, of the functional groups in the molecule.
Examples of the curing agent include an aminoplast resin and polyisocyanate compound.
The aminoplast resin is a resin produced by a dehydrate condensation reaction of a compound containing an amino group or an amide group, such as melamine, benzoguanamine, urea, dicyandiamide and glycolurea, with formaldehyde in the presence of an alcohol such as methyl alcohol, ethyl alcohol, propyl alcohol, n-butyl alcohol and isobutyl alcohol.
The polyisocyanate compound includes aliphatic and alicyclic diisocyanate compounds such as hexamethylene diisocyanate, trimethylhexamethylene diisocyanate, isophorone diisocyanate and 4,4'-diisocyanatoethyl dicyclohexyl methane, and cyanurate compounds, biuret compounds and adduct compounds thereof, and blocked isocyanate compounds blocked the isocyanate group of the compounds described above with active methylene group, oxime, lactam, alcohol or phenol.
The curing agent (2) may be utilized singly or as a combination of two or more kinds.
The compound ratio of the curing agent is not paticularly limited, usually 10 to 100 parts by weight to 100 parts by weight of the resin component (1). When the curing agent is the aminoplast resin, the compound ratio of the resin component (1) and the aminoplast resin is usually 80 : 20 to 50: 50, preferably 70: 30 tpo 60 : 40 based on resin solid content. When the curing agent is the isocyanate compound, the compound ratio of the resin component (1) and the isocyanate compound is usually 1 : 0.7 to 0.7 : 1, preferably 1 : 0.85 to 0.85 1 in the ratio of hydoxyl group and isocyanate group.
Examples of the Lewis acid catalyst (3) include metal halides such as boron trifluoride, aluminium trichloride, titanium (III) chloride, titanium (IV) chloride, ferrous chloride, ferric chloride, zinc chloride, zinc bromide, stannous chloride, stannic chloride, stannous bromide and stannic bromide ; and organic metallic compounds such as trialkylboron, trialkyl aluminium, dialkylhalogenated aluminium, monoalkylhalogenated aluminium , tetraalkyl tin , aluminium acetylacetonate, iron acetylacetonate, zirconium acetylacetonate, dibutyltin acetylacetonate , dibutyltin dilaurate , dioctyltinester maleate, magnesium naphthenate, calsium naphthenate, manganese naphthenate , iron naphthenate , cobalt naphthenate , copper naphthenate, zinc naphthenate, ziruconium naphthenate, lead naphthenate, calcium octylate, manganese octylate, iron octylate, cobalt octylate, zinc octylate, zirconium octylate, tin octylate, lead octylate, zinc laurate, magnesium stearate, aluminium stearate, calcium stearate, cobalt stearate, zinc stearate and lead stearate.
Preferable examples of the Lewis acid catalyst are zinc compounds, more preferable examples of the Lewis acid catalyst are zinc chloride, zinc naphthenate and zinc octylate.
The Lewis acid catalyst may be utilized singly or as a combination of two or more kinds.
The Lewis acid catalyst acts as a reacting catalyst in the reaction of epoxy groups of the resin component (1) in the curable base-coat composition with the curable clear-coat composition and as curing catalyst in the curable

base-coat composition. The amount of the Lewis acid catalyst is usually 0.05 to 3 % by weight, preferably 0. 1 to 2 % by weight to the total resin solid component in the curable base-coat composition.

Examples of the color pigments include inorganic pigments such as titanium dioxide, zinc white, yellow iron oxide, red iron oxide and carbon black ; and organic pigments such as phthalocyanine blue, threne blue, phthalocyanine green, nonsoluble azo, soluble azo, perylene, quinacridone red, thioindigo red, dioxazine violet , anthrapyrimidine yellow, quinophthalone yellow and benzidine yellow.

Examples of the bright pigments include aluminium flake, nickel flake, pearl mica, colored pearl mica, micro titanium oxide and micro graphite.

The color pigments or the bright pigments may be utilized singly or as a combination of two or more kinds.

The amount of the color pigment and/or the bright pigment is usually 0.5 to 200 parts by weight, preferably 2 to 100 parts by weight, to 100 parts by weight of the total resin solid component.

The curable base-coat composition of the invention may be optionally compounded with one or two kind of various resins such as acrylicresins, polyester resins and cellulose acetate butylate ; and one or two kind of various additives such as rheology control agents such as polyethylene waxs, polyamide waxs and microparticulate internal crosslinked resins ; body pigments such as tarc, kaolin, bentonite and hydrophobic silica ; ultraviolet absorber, light stabilizer, preventing agent of yellowing, leveling agent and preventing agent of popping, which are added as the supplementary components in usual solvent type coating composition.

The curable base-coat composition of the invention can be utilized as solution type coating compositions.

Solvents utilized are not limited so long as the solvents can dissolve the Lewis acid catalyst and include aliphatic hydrocarbons such as n-hexane, n-heptane and n-octane ; aromatic hydrocarbons such as benzene, toluene and xylene; halogenated hydrocarbons such as chloroform and carbon tetrachloride; alcohols such as methanol, ethanol, isopropanol and butanol ; ethers such as dibutylether, tetrahydrofuran and dioxane ; ketones such as acetone , methylethylketone and methylisobutylketone ; esters such as ethyl acetate, n-propyl acetate and n-butyl acetate, which are used as usual coating solvents. The solution prepared by mixing the solvent and water in an amount to be soluble may be used as the solvent.

The solvents may be utilized singly or as a combination of two or more kinds.

The curable base-coat composition of the invention is particularly effective, when that is used in a method of film-forming comprising coating the curable base-coat composition on a substrate and coating a curable clear-coat composition comprising an acid curing agent blocked chemically and a resin containing an epoxy group on the base coat via a wet-on-wet technique.

The curable clear-coat composition includes the acid curing agent blocked chemically as the compound (A). The acid curing agent blocked chemically is that wherein the functional group of the acid curing agent blocked chemically reacts with a blocking agent and the functional group is blocked. Examples of the acid curing agent blocked chemically include that such as ester derivatives, acid amide derivatives, hydrazide derivatives, oxim derivatives, alkoxyester derivatives and thioalkoxyester derivatives.

Examples of the alkoxyester derivatives which are suitable compounds of the acid curing agents blocked chemically of the compound (A) are those having in the molecule two or more, preferably from 2 to 50, functional groups of the following formula (1) :

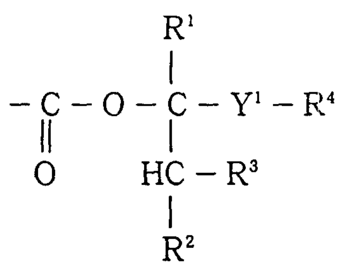

..... (1)

wherein $R^1$, $R^2$ and $R^3$ are selected from the group consisting of a hydrogen atom and an organic group of 1 to 18 carbon atoms, $R^4$ is an organic group of 1 to 18 carbon atoms, $Y^1$ is selected from the group consisting of an oxygen atom and a sulfur atom and $R^3$ and $R^4$ may be bonded with each other to form a hetero-cyclic structure which comprises $Y^1$ as the hetero atom component.

The functional group having the formula (1) is easily prepared by reaction of carboxyl group with a vinyl ether, a vinyl thioether or a heterocyclic compound having oxygen or sulfur as the hetero atom and having a vinyl type double bond which is described by the formula (2) :

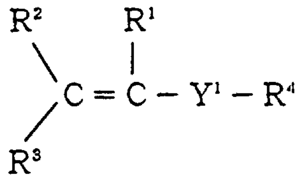 ..... (2)

wherein $R^1$, $R^2$, $R^3$, $R^4$ and $Y^1$ have the same meaning as described above.

In the formula (1) and formula (2), $R^1$, $R^2$ and $R^3$ are selected from the group consisting of a hydrogen atom and an organic group, such as an alkyl group, an aryl group and an alkaryl group of 1 to 18 carbon atoms, $R^4$ is an organic group, such as an alkyl group, an aryl group and an alkaryl group of 1 to 18 carbon atoms. The organic groups may have substituted groups in the molecule and $R^3$ and $R^4$ may be bonded with each other to form a heterocyclic structure with or without substituents and having $Y^1$ as the hetero atom component.

Preferable examples of $R^1$, $R^2$ and $R^3$ are a hydrogen atom, alkyl groups, aryl groups and alkaryl groups of 1 to 10 carbon atoms. Preferable examples of $R^4$ are alkyl groups, aryl groups and alkaryl groups of 1 to 10 carbon atoms. The alkyl groups also contain cycloalkyl groups and aralkyl groups.

Examples of the compound of the formula (2) include aliphatic vinyl ethers, such as methyl vinyl ether, ethyl vinyl ether, isopropyl vinyl ether, n-propyl vinyl ether, n-butyl vinyl ether, isobutyl vinyl ether, 2-ethylhexyl vinyl ether and cyclohexyl vinyl ether ; aliphatic vinyl thioethers, such as methyl vinyl thioether, ethyl vinyl thioether, isopropyl vinyl thioether, n-propyl vinyl thioether, n-butyl vinyl thioether, isobutyl vinyl thioether, 2-ethylhexyl vinyl thioether and cyclohexyl vinyl thioether ; cyclic vinyl ethers, such as 2,3-dihydrofuran, 3,4-dihydrofuran, 2,3-dihydro-2H-pyran, 3,4-dihydro-2H-pyran, 3,4-dihydro-2-methoxy-2H-pyran, 3,4-dihydro-4,4-dimethyl-2H-pyran-2-on, 3,4-dihydro-2-ethoxy-2H-pyran and sodium 3,4-dihydro-2H-pyran-2-carboxylate ; and cyclic vinyl thioethers , such as 2,3-dihydrothiophene, 3,4-dihydrothiophene, 2,3-dihydro-2H-thiopyran, 3,4-dihydro-2H-thiopyran, 3,4-dihydro-2-methoxy-2H-thiopyran, 3,4-dihydro-4,4-dimethyl-2H-thiopyran-2-on, 3,4-dihydro-2-ethoxy-2H-thiopyran and sodium 3,4-dihydro-2H-thiopyran-2-carboxylate.

The compound (A) is prepared by the reaction of a compound having two or more, preferably 2 to 50, carboxyl groups in the molecule with the compound having the formula (2). Examples of the compound having two or more carboxyl groups in the molecule are : aliphatic polycarboxylic acids of 2 to 22 carbon atoms, such as succinic acid , adipic acid , azelaic acid , sebacic acid and decamethylenedicarboxylic acid ; aromatic polycarboxylic acids, such as phthalic acid, isophathalic acid, terephathalic acid, trimellitic acid and pyromellitic acid ; alicyclic polycarboxylic acids, such as tetrahydrophthalic acid , hexahydrophthalic acid and methylhexahydrophthalic acid ; resins having two or more carboxyl groups in the molecule, such as polyester resins, acrylic resins and polybutadiene resins modified with maleic acid resins having two or more carboxyl groups in the molecule ; and silicone oils containing carboxyl groups, such as X - 22 - 162A ® and X - 22 - 162C ® (a product of Shin — Etsu Chemical Co., Ltd).

The compound having two or more carboxyl groups in the molecule is prepared by : (1) half-esterification of a polyol having two or more, preferably 2 to 50, hydroxyl groups in the molecule with an acid anhydride ; (2) addition of a polyisocyanate compound having two or more, preferably 2 to 50 isocyanate groups in the molecule with a hydroxycarboxylic acid or an amino acid ; (3) homopolymerization of an α,β-unsaturated monomer having a carboxyl group or copolymerization of the α,β-unsaturated monomer with other α,β-unsaturated monomers; (4) preparation of polyester resin having carboxyl groups and other methods.

Examples of the polyol having two or more hydroxyl groups include : polyols such as ethylene glycol, 1,2-propylene glycol, 1,3-propylene glycol, 1,3-butanediol, 1,4-butanediol, 2,3-butanediol, 1,6-hexanediol, diethylene glycol, pentanediol , dimethylbutanediol, hydrogenated bisphenol A, glycerol, sorbitol, neopentyl glycol, 1,8-octanediol, 1,4-cyclohexanedimethanol, 2-methyl-1,3-propanediol, 1,2,6-hexanetriol, 1,2,4-butanetriol, trimethylolethane, trimethylolpropane, pentaerythritol, quinitol, mannitol, tris-hydroxyethyl isocyanurate and dipentaerythritol ; addition products of the polyhydric alcohols with a lactone, such as γ-butyrolactone and ε -caprolactone, by ring opening of the lactone ; addition products of the polyol with an isocyanate, such as tolylene diisocyanate, diphenylmethane diisocyanate , hexamethylene diisocyanate and isophorone diisocyanate, in excess amount of the alcohol ; addition products of the polyhydric alcohols with a divinyl ether, such as ethylene glycol divinyl ether, polyethylene glycol divinyl ether, butanediol divinyl ether, pentanediol divinyl ether, hexanediol divinyl ether and 1,4-cyclohexanedimethanol divinyl ether, in excess amount of the alcohol ; addition products of the polyol with an alkoxysilicone compound, such as KR-213 ®, KR-217 ® and KR-9218 ® (products of Shin-Etsu Chemical Co., Ltd.), in excess amount of the alcohol; and silicone oils containing hydroxyl groups, such as X - 22 - 160AS ® and KF - 6001 ® (a product of Shin-Etsu Chemical Co., Ltd).

Examples of the acid anhydride which reacts with the polyol having two or more hydroxyl groups in the molecule include acid anhydrides of polycarboxylic acids, such as succinic acid, glutaric acid, adipic acid, azelaic acid, sebacic acid, decamethylenedicarboxylic acid, phthalic acid, maleic acid, trimellitic acid, pyromellitic acid, tetrahydrophthalic acid , hexahydrophthalic acid and methylhexahydrophthalic acid .

Examples of the polyisocyanate compound having two or more isocyanate groups in the molecule include p-phenylene diisocyanate, biphenyl diisocyanate, tolylene diisocyanate, 3,3'-dimethyl-4,4'-biphenylene diisocyanate, 1 , 4 - tetramethylene diisocyanate, hexamethylene diisocyanate, 2,2,4-trimethylhexane-1,6-diisocyanate, methylene-bis-(phenyl isocyanate), lysine methyl ester diisocyanate, bis - ( isocyanatoethyl ) fumarate , isophorone diisocyanate, methylcyclohexyldiisocyanate, 2-isocyanatoethyl-2,6-diisocyanatohexanoate, biuret derivatives of these polyisocyanates and isocyanurate derivatives of these polyisocyanates compounds.

Examples of the hydroxycarboxylic acid which reacts with the polyisocyanate compound include lactic acid , citric acid , hydroxypivalic acid, 12-hydroxystearic acid, malic acid. Examples of the amino acid which reacts with the polyisocyanate compound include : DL-alanine, L-glutamic acid, glycine, L-teanine, glycylglycine, γ-aminocaproic acid, L-aspartic acid, L-citrulline, L-arginine, L-leucine and L-serine.

Examples of the α,β-unsaturated monomer having a carboxyl group which are homopolymerized or copolymerized include acrylic acid, methacrylic acid, itaconic acid, mesaconic acid, maleic acid, fumaric acid. Examples of the other α,β-unsaturated monomer which is copolymerized with the α,β-unsaturated monomer having a carboxyl group include methylacrylate, ethylacrylate, n-propylacrylate, isopropylacrylate, n-butylacrylate, isobutylacrylate, sec-butylacrylate, cyclohexylacrylate, 2 - ethylhexylacrylate , stearylacrylate , methylmethacrylate , ethylmethacrylate , n - propylmethacrylate , isopropylmethacrylate, n-butylmethacrylate, isobutylmethacrylate, sec-butylmethacrylate, cyclohexylmethacrylate, 2-ethylhexylmethacrylate, stearylmethacrylate, styrene, α - methylstyrene, p - vinyltoluene and acrylonitrile.

The polyester resin having carboxyl groups is easily prepared according to the conventional method of preparation of polyester resins by using excess amount of polyacid in relation to the amount of polyol.

The reaction of the compound having two or more carboxyl group in the molecule with the compound having the formula (2) is generally performed at a temperature between room temperature and 100°C in the presence of an acid catalyst.

The compound (A) is also prepared by homopolymerizing a product obtained by reacting the α,β -unsaturated monomer having a carboxyl group with the compound of formula (2), or by copolymerizing the product and another α, β-unsaturated monomer.

Examples of the α,β-unsaturated monomer having a carboxyl group which react with the compound of formula (2) include: acrylic acid, methacrylic acid, itaconic acid, mesaconic acid, maleic acid, fumaric acid. Examples of the other α,β-unsaturated monomer which is copolymerized with the α,β-unsaturated monomer having carboxyl group include : methylacrylate, ethylacrylate, n - propylacrylate, isopropylacrylate, n-butylacrylate, isobutylacrylate, sec-butylacrylate, cyclohexylacrylate, 2 - ethylhexylacrylate , stearylacrylate, methylmethacrylate , ethylmethacrylate, n - propylmethacrylate, isopropylmethacrylate, n-butylmethacrylate, isobutylmethacrylate, sec-butylmethacrylate, cyclohexylmethacrylate, 2-ethylhexylmethacrylate, stearylmethacrylate, styrene, α - methylstyrene, p - vinyltoluene and acrylonitrile.

Either a single kind of the compound (A) or a combination of two or more kinds of the compound (A) may be utilized in the curable clear-coat composition of the invention.

The compounds (B) utilized in the curable clear-coat composition of the invention are resins having in the molecule two or more, preferably from 2 to 50, epoxy groups which can form chemical bonds by the reaction with the regenerated carboxyl group formed from the blocked carboxyl group of the compound (A) by heating or in the presence of the acid catalyst.

Examples of the resins having epoxy groups include epoxy resins of bisphenol type, alicyclic epoxy resins, homopolymers and copolymers of the monomer such as glycidyl acrylate, glycidyl methacrylate, 3 , 4 - epoxycyclohexylmethyl acrylate, 3,4-epoxycyclohexylmethyl methacrylate compounds , copolymers of glycidyl allyl ether, vinylidene fluoride and vinyl ether, polyglycidyl compounds obtained by the reaction of epichlorohydrine with a polycarboxylic acid or a polyol, and a silicone oil containing epoxy groups, such as KF — 101 ®, KF — 103 ®, KF - 105 ® and X - 22-169AS® (products of Shin — Etsu Chemical Co., Ltd).

In the curable clear-coat composition, it is preferable that at least one of the compounds (A) and/or the compound (B) is a polymer of an α,β-unsaturated compound or a polyester resin. It is also preferable that the equivalent ratio of the functional group of the formula (1) and the epoxy group to form chemical bond with the former functional group utilized in the curable clear-coat composition is adjusted in the range from 0.2 1.0 to 1.0 : 0.2.

The functional groups having the formula (1) in the compound (A) of the curable clear-coat composition regenerate free carboxyl groups by heating or in the presence of the acid catalyst and form chemical linkages with the epoxy groups in the compound (B). As active ester, the functional groups of the compound (A) can also react with the epoxy groups in the compound (B) by addition between the functional groups and this addition reactions can contribute to decreasing amount of volatile organic substances discharged into air because the addition reactions are not accompanied with elimination reactions during the crosslinking.

The resins having epoxy groups is most preferable in the curable clear-coat composition utilized in the invention.

However, the compounds having in the molecule two or more, preferably from 2 to 50, reactive functional groups other than epoxy groups which can form chemical bonds by the reaction with the regenerated carboxyl group formed from the blocked carboxyl group (1) of the compound (A) by heating or in the presence of the acid catalyst can be used instead of the resins having epoxy groups.

The kind of the reactive functional group is not particularly limited so long as it has the property described above. Preferable examples of the reactive functional group include oxazoline group, silanol group, alkoxysilane group, hydroxyl group, amino group, imino group , isocyanate group , blocked isocyanate group , cyclocarbonate group, vinyl ether group, vinyl thioether group, aminomethylol group, alkylated aminomethylol group, acetal group and ketal group. Either a single kind of the reactive functional groups or a combination of two or more kinds of the reactive functional groups may be utilized.

Examples of the compounds utilized instead of the compound (B) include compounds having oxazoline group, such as oxazoline compounds having an oxazoline ring connected to an alkyl chain like 1,2-bis (2-oxazolinyl-2) ethane, 1,4-bis (2-oxazolinyl-2) butane, 1,6-bis (2-oxazolinyl-2) hexane, 1,8-bis (2-oxazolinyl-2) octane and 1,4-bis (2-oxazolinyl-2) cyclohexane, oxazoline compounds having two oxazoline rings connected to an aromatic ring like benzene ring like 1,2-bis (2-oxazolinyl-2) benzene, 1,3-bis (2-oxazolinyl-2) benzene, 1,4-bis (2-oxazolinyl-2) benzene, 5,5'-dimethyl-2,2'-bis (2-oxazolinyl-2) benzene, 4,4, 4',4'-tetramethyl-2,2'-bis (2-oxazolinyl-2) benzene, 1,2-bis (5-methyl-2-oxazolinyl-2) benzene, 1,3-bis (5-methyl-2-oxazolinyl-2) benzene and 1,4-bis (5-methyl-2-oxazolinyl-2) benzene, bis (2-oxazoline) compounds such as 2,2-bis (2-oxazoline), 2,2'-bis (4-methyl-2-oxazoline) and 2,2'-bis (5-methyl-2-oxazoline), polyfunctional oxazoline compounds obtained by the reaction of hydroxyalkyl-2-oxazoline with the polyisocyanate compounds described above, compounds comprising oxazoline group like polymers and copolymers of 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline or 2-isopropenyl-5-ethyl-2-oxazoline, commercial compounds comprising oxazoline group like CX-RS-1200 ®, CX-RS-3200 ® (products of Nippon Shokubai Co., Ltd.) ; compounds having silanol group or alkoxysilane group, such as condensation products of a compound having the formula (3) :

$$(R)_m\ Si\ (OR')_{4-m} \qquad (3)$$

wherein R and R' are each selected from the group consisting of alkyl group of 1 to 18 carbon atoms and aryl group of 1 to 18 carbon atoms and m is 0, 1 or 2, homopolymers and copolymers of $\alpha,\beta$-unsaturated silane compounds, like acryloyloxypropyltrimethoxy silane, methacryloyloxypropyltrimethoxysilane and methacryoyloxypropyltri - n - butoxysilane, compounds having silanol group or alkoxysilane group such as hydrolysis products of these compounds ; compounds having hydroxyl group, such as aliphatic polyols, phenols and polyalkyleneoxyglycols, homopolymers and copolymers of $\alpha,\beta$-unsaturated compounds, like 2-hydroxyethylacrylates, 2-hydroxypropyl acrylate, 2 - hydroxyethyl methacrylates and 2 - hydroxypropyl methacrylate, addition products of $\varepsilon$ - caprolactone with these polyhydroxyl compounds ; compounds having amino group, such as aliphatic diamino compounds , aromatic diamino compounds , polyamino compounds , polyamino compounds prepared by cyanoethylation and reduction of the compounds having hydroxyl group ; compounds having imino group, such as aliphatic polyimino compounds and aromatic polyimino compounds ; compounds having isocyanate group, such as p - phenylene diisocyanate, biphenyl diisocyanate, tolylene diisocyanate, 3,3'-dimethyl-4,4'-biphenylene diisocyanate, 1 , 4 - tetramethylene diisocyanate, hexamethylene diisocyanate, 2,2,4-trimethylhexane-1,6-diisocyanate, methylene - bis (phenyl isocyanate), lysine methyl ester diisocyanate, bis-(isocyanatoethyl) fumarate, isophorone diisocyanate, methylcyclohexyl diisocyanate, 2 - isocyanatoethyl 2,6-diisocyanatehexanoate, biuret derivatives and isocyanurate derivatives of these isocyanates and addition products of these isocyanates and the compounds having hydroxyl group ; compounds having blocked isocyanate group, such as compound prepared by blocking the compounds having isocyanate group with phenols, lactams, active methylenes, alcohols, acid amides, imides, amines, imidazoles, ureas, imines, or oximes compounds ; compounds having cyclocarbonate group, such as homopolymers and copolymers of 3 - acryloyloxypropylene carbonate or 3-methacryloyloxypropylene carbonate , compounds having polyfunctional cyclocarbonate groups prepared by the reaction of the compounds having epoxy group with carbon dioxide ; compounds having vinyl ether group or vinyl thioether group, such as polyfunctional vinyl ether compounds prepared by the reaction of the compounds having hydroxyl group with halogenated alkyl vinyl ethers, polyvinyl ethers prepared by the reaction of hydroxyalkyl vinyl ethers with compounds having polyfunctional carboxyl group or with the compounds having isocyanate group, copolymer of vinyloxyalkyl acrylates or vinyloxyalkyl methacrylates with $\alpha,\beta$-unsaturated compounds, vinyl thioethers corresponding to the vinyl ethers ; compounds having aminomethylol groups or alkylated aminomethylol groups, such as melamine formaldehyde resins, glycolyl formaldehyde resins and urea formaldehyde resins , homopolymers and copolymers of $\alpha,\beta$-unsaturated compounds having aminomethylol group or alkylated aminomethylol group ; compounds having acetal groups or ketal

groups, such as polyfunctional acetal compounds prepared by the reaction of polyfunctional ketones, polyfunctional aldehydes , or the polyfunctional vinyl ether compounds described above compounds with alcohols or orthoacids esters, condensation products of the polyfunctional acetal compounds with polyols, homopolymers and copolymers of addition products of the vinyloxyalkyl acrylate or vinyloxyalkyl methacrylate with alcohols or orthoacid esters.

Preferable examples of R and R' in the formula (3) are, for example, the same as those of $R^1$ of the formula (1).

The curable clear-coat composition includes thermosetting clear-coat compositions which are cured by heating and the coating compositions curable at lower temperatures which is able to be cured at room temperature.

The thermal latent acid catalyst as the component (C) which shows activity in the curing condition at an elevated temperature is optionally comprised in the thermosetting clear-coat compositions for the purpose of keeping excellent storage stability of the composition for a long period of time, promoting the curing reaction and giving excellent chemical properties , physical properties , weathering resistance and stain resistance to the cured film.

Preferred examples of the thermal latent acid catalyst (C) are compounds prepared by neutralizing Bronsted acids or Lewis acids with Lewis bases, complex compounds formed from Lewis acids and Bronsted acids, complex compounds formed from Lewis acids and Bronsted salts, esters of sulfonic acids, esters of phosphoric acid and onium compounds.

The Bronsted acid forming the thermal latent acid catalyst is a substance showing acidity with dissociation of proton and preferably sulfuric acid, sulfonic acid, phosphoric acid, boric acid, carboxylic acids and derivatives thereof.

Examples of the Bronsted acid are sulfuric acid, monoesters of sulfuric acid, phosphoric acid, monoesters and diesters of phosphoric acid, esters of polyphosphoric acid, monoesters and diesters of boric acid, sulfonic acids, carboxylic acids and halogenocarboxylic acids, preferably, alkylbenzenesulfonic acids having 1 to 50 carbon atoms, such as dodecylbenzene sulfonic acid, mono- or dihalogenocarboxylic acids having 1 to 50 carbon atoms, such as chloroacetic acid and dichloroacetic acid, alkyl monoesters and diesters of phosphoric acid having 1 to 50 carbon atoms, such as monomethyl phosphate and dimethyl phosphate. The Bronsted acid may be utilized singly or as a combination of two or more kinds.

The Lewis acid forming the thermal latent acid catalyst is a compound having the property of accepting electrons and preferably a metal halide or a organometallic compound having the formula :

$$(R^5)_n - M \qquad (4)$$

wherein $R^5$ is a halogen atom or one or more kinds of organic groups selected from the group consisting of alkyl groups, aryl groups, alkoxy groups and acyloxy groups of 1 to 20 carbon atoms and a carbonyl group adjacent to an active methylene group, M is B, Mg, Al, Ca, Sn, Pb or a transition metal atom belonging to one of the 3A group to the 7A group, the 8A group, the 1B group and the 2B group in the fourth to the sixth period of the long Periodic Table and n is an integer in the range from 1 to 6.

The metals forming the Lewis acid in the long Periodic Table descrived above are classified according to the method of nomenclature of inorganic chemistry by IUPAC in 1988.

Examples the Lewis acid include the Lewis acids mentioned above. The Lewis acids can be utilized singly or as a combination of two or more kinds.

The Lewis base utilized for neutralizing the Bronsted acid or the Lewis acid is a compound having the property of donating electrons. Examples of the Lewis base are amines, such as ammonia, triethylamine, pyridine, aniline, morpholine, N - methylmorpholine, pyrrolidine, N - methylpyrrolidine, piperidine , N - methylpiperidine , cyclohexylamine, n - butylamine, dimethyloxazoline , imidazole , N-methylimidazole, N,N-dimethylethanolamine, N,N-diethylethanolamine, N , N - dipropylethanolamine, N , N - dibuylethanolamine , N,N-dimethylisopropanolamine, N , N - diethylisopropanolamine, N,N-dipropylisopropanolamine , N , N - dibutylisopropanolamine , N-methyldiethanolamine, N-ethyldiethanolamine, N-propyldiethanolamine, N - N-propyldiethanolamine, N - butyldiethanolamine , N-methyldiisopropanolami:ne , N - ethyldiisopropanolamine , N-propyldiisopropanolamine, N-butyldiisopropanolamine, triethanolamine, triisopropanolamine and tri-s-butanolamine ; amides such as N,N-dimethylformamide, N,N-dimethylacetamide, N-methylpyrrolidone and hexamethylphosphoric acid triamide ; sulfoxide compounds such as dimethylsulfoxide; ethers such as diethylether and tetrahydrofuran ; thioethers such as dimethylsulfide ; esters of phosphoric acid such as trimethyl phosphate, triethylphosphate and tributyl phosphate ; esters of boric acid such as trimethyl borate ; esters of carboxylic acids such as ethylacetate and butyl acetate; esters of carbonic acid such as ethylene carbonate ; trialkylphosphines such as tributylphosphine.

In the thermal latent acid catalyst obtained by neutralizing the Bronsted acid or the Lewis acid with the Lewis base, the ratio of the basic activity of the Lewis base to the acidic activity of the acid is preferably in the range from 0.1 to 10.

The esters of sulfonic acids utilized as (C) the thermal latent acid catalyst are compounds having the formula

(5) :

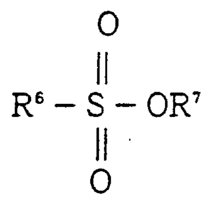

(5)

wherein $R^6$ is selected from the group consisting of phenyl group, substitued phenyl group, naphthyl group, substituted naphthyl group and alkyl group and $R^7$ is a group of 3 to 18 carbon atoms bonded with sulfonyloxy group through a primary or secondary carbon atom which is selected from the group consisting of alkyl group, alkenyl group, aryl group, alkaryl group, alkanol group, saturated or unsaturated cycloallyl group and saturated or unsaturated hydroxycycloallyl group. Examples of the above compounds are esters of sulfonic acids such as methane sulfonic acid, ethane sulfonic acid, benzene sulfonic acid, dodecylbenzene sulfonic acid, naphthalene sulfonic acid and nonylnaphthalene sulfonic acid, with primary alcohols such as n-propanol, n-butanol, n-hexanol and n-octanol, or secondary alcohols such as isopropanol, 2-butanol, 2-hexanol, 2-octanol and cyclohexanol, and β-hydroxyalkylsulfonic esters prepared by the reaction of the sulfonic acid and compounds containing oxirane group.

The esters of phosphoric acid are, for example, compounds having the formula (6)

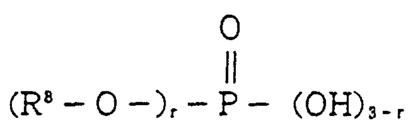

(6)

wherein $R^8$ is a group of 3 to 10 carbon atoms selected from the group consisting of alkyl group, cycloalkyl group and aryl group and r is 1 or 2. Examples of the above compounds are monoesters and diesters of phosphoric acid with primary alcohols such as n-propanol, n-butanol, n-hexanol, n-octanol and 2-ethylhexanol, or secondary alcohols such as isopropanol, 2-butanol, 2-hexanol, 2-octanol and cyclohexanol, and β - hydroxyester compounds obtained by reaction of phosphoric acid with oxirane compounds.

The onium compounds are compounds having one of the formulas (7) to (10) :

$$((R^9)_3NR^{10})^+X^- \qquad (7)$$

$$((R^9)_3PR^{10})^+X^- \qquad (8)$$

$$((R^9)_3OR^{10})^+X^- \qquad (9)$$

and

$$((R^9)_3SR^{10})^+X^- \qquad (10)$$

wherein $R^9$ is a group of 1 to 12 carbon atoms selected from the group consisting of alkyl group, alkenyl group, aryl group, alkaryl group, alkanol group and cycloalkyl group, two $R^9$ groups may be bonded together to form a heterocyclic ring in which N, P, O or S is the hetero atom, $R^{10}$ is a hydrogen atom or a group of 1 to 12 carbon atoms selected from the group consisting of alkyl group, alkenyl group, aryl group and alkaryl group and X' is selected from the group consisting of $SbF_6^-$, $AsF_6^-$, $PF_6^-$ and $BF_4^-$.

The Bronsted salt utilized for forming the complex compound is a compound obtained by neutralizing the Bronsted acid described. above with a base. Examples of the Bronsted salt are compuonds obtained by blocking Bronsted acids such as sulfuric acid, monoesters of sulfuric acid, phosphoric acid, monoesters and diesters of phosphoric acid, esters of poylphosporic acid, monoesters and diesters of boric acid , sulfonic acid , carboxylic acid , and

halogenocarboxylic acid, with amines such as ammonia, triethylamine, pyridine, aniline, morpholine, N-methylmorpholine, pyrrolidine, N-methylpyrrolidine, piperidine, N-methylpiperidine, cyclohexylamine, n-butylamine, diethanolamine, triethanolamine, imidazole and N-methylimidazole , trialkylphosphines such as tributylphosphine, triarylphosphines such as triphenylphosphine ; commercial acid-base blocked catalysts such as Nacure 2500X ®, Nacure 3525 ® and Nacure 5225 ® (products of King Industry Co., Ltd).

The complex compounds formed from Lewis acids and Bronsted acids and the complex compounds formed from Lewis acids and Bronsted salts are complex compounds formed by coordination of the conjugate base of the Bronsted acid or the Bronsted salt to the vacant orbital of the Lewis acid showing the catalystic acitivity and can be obtained easily by mixing the Lewis acid described above with the Bronsted acid described above or with the Bronsted salt described above in a mol ratio of the Bronsted acid or the Bronsted salt to the vacant orbital of the Lewis acid in the range from 0.1 to 4.

In the thermosetting clear-coat composition, the thermal latent acid catalysts (C) may be utilized singly or as a combination of two or more kinds. The amount utilized is usually in the range from 0.01 to 20 weight parts, preferably in the range from 0.02 to 10 weight parts, based on 100 weight parts of the total solid component which is the sum of the compound (A) and the compound (B). When the amount of the thermal latent acid catalysts is less than 0.01 weight parts, the promoting effect of the catalytic acitivity may be not sufficiently manifested because the amount is too little. When the amount is more than 20 weight parts, the promoting effect is lower than the value expected by the amount of the catalysts and the decrease in properties of the cured film may be caused by the presence of the catalyst in great quantities as residue in the cured film.

Another catalytic component (C) is a thermal latent acid catalyst (a) which comprises a compound having an epoxy group (i), a compound having a sulfur atom (ii) of formula (11) :

$$R^{11}\text{- S-}R^{12} \qquad (11)$$

wherein $R^{11}$ and $R^{12}$ are each selected from the group consisting of a hydrogen atom and an organic group of 1 to 40 carbon atoms, $R^{11}$ and $R^{12}$ are the same or different each other, and $R^{11}$ and $R^{12}$ may be bonded with each other to form a cyclic structure; and a Lewis acid (iii) of formula (12) :

$$(X^1)_{n1}\text{-}M^1\text{-}(R^{13})_{n2} \qquad (12)$$

wherein $M^1$ is selected from the group consisting of a boron atom, an aluminium atom, a tin atom, a lead atom and a transition element, $X^1$ is one or more of a halogen atom, $R^{13}$ is one or more of an organic group of 1 to 40 carbon atoms, $R^{13}$ may form a chelate ring by coordinating to $M^1$ atom, n1 and n2 are each 0 through 6 of an integer, and n1 plus n2 equals 1 through 6 of an integer ; and optionally, a carboxylic acid compound and/or a carboxylic acid anhydride compound (iv).

The thermal latent acid catalyst (a) manifests thermal latent property by protecting a vacant electron orbit of the Lewis acid (iii) of the formula (12) with complex action of the epoxy compound (i) and the compound having a sulfur atom (ii) each other.

The thermal latent acid catalyst (a) may be comprised by a carboxylic acid compound and/or a carboxylic acid anhydride compound (iv) other than above three compounds. The thermal latent acid catalyst (a) is improved in solubility to organic solvents by act of the carboxylic acid compound and/or the carboxylic acid anhydride compound (iv). That is, when inorganic metal salts are used as the Lewis acid (iii), the solubility of thermal latent acid catalyst (a) without the carboxylic acid compound and/or the carboxylic acid anhydride compound (iv) to organic solvents is inferior and the range of utilization of the thermal latent acid catalyst (a) is narrow. However, the thermal latent acid catalyst (a) also comprised by the carboxylic acid compound and/or the carboxylic acid anhydride compound (iv) is improved in the solubility and has excellent practicability.

The epoxy compound (i) has one or more epoxy groups in the molecule and may be a monomer or a polymer.

Examples of the epoxy compound (i) include aliphatic monoepoxide compounds derived from alkene such as propyleneoxide , butyleneoxide; alicyclic monoepoxide compounds derived cycloalkene such as cyclohexeneoxide, CELOXIDE2000 ® (a product of Daicel Chemical Industries Co., Ltd.), CELOXIDE3000 ® (a product of Daicel Chemical Industries Co., Ltd.), RIKARESIN E - 8 ® (a product of New Japan Chemical Co., Ltd.), 3,4 - epoxycyclohexyl methyl acrylate, 3,4 - epoxycyclohexylmethyl methyacrylate ; aromatic monoepoxide compounds such as styreneoxide, stilbeneoxide; glycidylether compounds such as methylglycidylether, ethylglycidylether, propylglycidylether, butylglycidylether, octylglycidylether, phenylglycidylether, allylglycidylether, polyalkyleneoxide monoglycidylether ; glycidylester compounds such as glycidylisobutyrate, CARDURA E - 10 ® (a product of Shell Co.), glycidylacrylate,

glycidylmethacrylate ; epoxy plasticizers such as SANSOCIZER E - 4030 ® (a product of New Japan Chemical Co., Ltd.), SANSOCIZER E - 6000 ® (a product of New Japan Chemical Co., Ltd.) and the like ; homopolymers of monomers having an epoxy group such as glycidylacrylate, glycidylmethacrylate, allylglycidylether, 3,4-epoxycyclohexylmethyl acrylate , 3 , 4 - epoxycyclohexylmethyl methacrylate or copolymers of the monomers having an epoxy group and one or more of the other monomers ; polymers having epoxy groups such as polyglycidyl compounds obtained by reacting polycarboxylic acids with epichlorohydrin or polyols with epichlorohydrin. Preferable examples are propyleneoxide , butyleneoxide, SANSOCIZER E — 4030 ® (a product of New Japan Chemical Co., Ltd.), SANSOCIZER E — 6000 ® (a product of New Japan Chemical Co., Ltd.), RIKARESIN E - 8® (a product of New Japan Chemical Co., Ltd.), cyclohexeneoxide, CELOXIDE3000® (a product of Daicel Chemical Industries Co. , Ltd.) , methylglycidylether, ethylglycidylether, propylglycidylether, butylglycidylether, CARDURA E — 10 ® (a product of Shell Co.), homopolymers or copolymers of glycidylacrylate, glycidylmethacrylate, allylglycidylether, 3,4-epoxycyclohexylmethylacrylate, 3,4 - epoxycyclohexylmethyl methacrylate.

When the epoxy compound (i) is a polymer, the content of the epoxy groups is preferably in the range from 0.1 to 7 mol/kg, more preferably 0.35 to 5 mol/kg.

Either a single kind of the epoxy compound (i) or a combination of two or more kinds of the epoxy compound (i) may be utilized in the invention.

The compound having a sulfur atom (ii) is a compound having a sulfur atom of formula (11).

In the formula (11), $R^{11}$ and $R^{12}$ are each selected from the group consisting of a hydrogen atom and an organic group of 1 to 40 carbon atoms, $R^{11}$ and $R^{12}$ are the same or different each other, and $R^{11}$ and $R^{12}$ may be bonded with each other to form a cyclic structure. The organic group are preferably an organic group of 1 to 18 carbon atoms, more preferably an organic group of 1 to 10 carbon atoms.

Examples of the organic groups include organic groups such as alkyl group, aryl group, alkaryl group, alkoxyl group, acyl group, acyloxyl group, alkoxycarbonyl group ; functional groups such as hydroxyl group, amino group, nitrile group, carboxyl group; and the organic groups substituted by the functional group.

Suitable examples of compound having a sulfur atom (ii) include alkyl sulfides such as methyl sulfide, ethyl sulfide, n-propyl sulfide, n-butyl sulfide, n-hexyl sulfide, isopropyl sulfide, sec-butyl sulfide, tert-butyl sulfide, n-octyl sulfide, 2-ethylhexyl sulfide ; hydroxyalkyl sulfides or the derivates such as 2-(ethylthio) ethanol, 2,2'-thiodiethanol, bis ( 2 - methoxyethyl ) sulfide ; sulfur - containing compounds having an aromatic ring such as diphenyl sulfide, thioanisole; sulfur-containing compounds having a carboxylic acid ester portion such as methyl methylthioacetate, ethyl methylthiopropionate, dimethyl thiodipropionate ; sulfur-containing compounds having a nitrile group such as thiodipropionitrile; cyclic sulfur - containing compounds such as tetrahydrothiophene, tetrahydrothiapyran, 1,2-oxathiorane, 1,3-oxathiorane, 1,3-oxathiane, 1,4-oxathiane. Preferable examples of compound having a sulfur atom (ii) are alkyl sulfides such as n-propyl sulfide, n-butyl sulfide, n-hexyl sulfide, isopropyl sulfide, sec-butyl sulfide, tert-butyl sulfide, n-octyl sulfide, 2-ethylhexyl sulfide, 2-(ethylthio) ethanol, bis (2-methoxyethyl ) sulfide , methyl methylthioacetate, ethyl methylthiopropionate, tetrahydrothiophene and 1,4-oxathiane.

Either a single kind of the compound having a sulfur atom (ii) or a combination of two or more kinds of the compound having a sulfur atom (ii) may be utilized.

The Lewis acid (iii) is a Lewis acid of formula (12).

In the formula (12), $M^1$ is selected from the group consisting of a boron atom, an aluminium atom, a tin atom, a lead atom and a transition element, $X^1$ is one or more of a halogen atom, $R^{13}$ is one or more of an organic group of 1 to 40 carbon atoms, $R^{13}$ may form a chelate ring by coordinating to $M^1$ atom, nl and n2 are each 0 through 6 of an integer, and nl plus n2 equals 1 through 6 of an integer.

The transition elements are 3 group through 12 groups in the fourth to the sixth period of the New IUPAC Periodic Table and are scandium, yttrium, lanthanides, titanium, zirconium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, cadmium and mercury.

Preferable examples of $M^1$ are boron, aluminium, tin, lead, titanium, zinc, iron, copper and zirconium. More preferable examples of $M^1$ are aluminium, tin, titanium, zinc and zirconium.

Examples of $X^1$ are fluorine, chlorine, bromine and iodine. Preferable examples of $X^1$ are fluorine, chlorine and bromine.

$R^{13}$ is preferably an organic group of 1 to 18 carbon atoms and more preferably an organic group of 1 to 10 carbon atoms.

Examples of the organic groups include alkyl group, aryl group, alkoxyl group, acyl group, acyloxyl group, alkoxycarbonyl group and preferably alkyl group, alkoxyl group, acyl group and acyloxyl group.

Examples of the Lewis acid (iii) are: metal halides, such as boron trifluoride, aluminium trichloride, titanium trichloride, titanium tetrachloride, ferrous chloride, ferric chloride, zinc chloride, zinc bromide, stannous chloride, stannic chloride, stannous bromide, stannic bromide ; organometallic compounds, such as trialkylboron, trialkylaluminium , dialkylaluminium halides , monoalkylalminium halides , tetraalkyltin; metallic chelate compounds such as diisopropoxyethylacetoacetate aluminium , tris ( ethylacetoacetate ) aluminium , isopropoxy bis ( ethylacetoacetate ) aluminium , monoacetylacetonato · bis (ethylacetoacetate) aluminium , tris (n-propylacetoacetate) aluminium, tris (n-butylacetoacetate) aluminium, monoethylacetoacetate · bis ( acetylacetonato ) aluminium , tris (acetylacetonato) aluminium, tris (propionylacetonato) aluminium, acetylacetonato ·bis (propionylacetonato) aluminium, diisopropoxy ·bis (ethylacetoacetate ) titanium , diisopropoxy · bis ( acetylacetonato ) titanium , tetrakis ( n - propylacetoacetate ) zirconium , tetrakis (acetylacetonato) zirconium, tetrakis (ethylacetoacetate) zirconium, dichloro·bis (acetylacetonato) tin, dibutyl·bis (acetylacetonato) tin, tris ( acetylacetonato ) iron , tris ( acetylacetonato ) chromium , tris (acetylacetonato ) rhodium , bis ( acetylacetonato ) zinc , tris (acetylacetonato) cobalt; metallic soaps such as dibutyltin dilaurate, dioctyltin ester maleate , magnesium naphthenate , calcium naphthenate, manganese naphthenate, iron naphthenate, cobalt naphthenate, copper naphthenate, zinc naphthenate, zirconium naphthenate, lead naphthenate, calcium octanoate, manganese octanoate, iron octanoate, cobalt octanoate, zinc octanoate, zirconium octanoate, tin octanoate, lead octanoate, zinc laurate, magnesium stearate, aluminium stearate, calcium stearate, cobalt stearate, zinc stearate, lead stearate ; and other like compounds. Preferable examples of the Lewis acid are chelate compounds containing boron, aluminium, tin, titanium, zinc and zirconium, metallic soaps and halides. When the carboxylic acid compound and/or the carboxylic acid anhydride compound (iv) are not comprised in the thermal latent acid catalyst (a), preferable examples of the Lewis acid are chelate compounds containing boron, aluminium, tin, titanium, zinc and zirconium, and metallic soaps in view of the solubility to organic solvents.

The Lewis acid (iii) may be utilized singly or as a combination of two or more kinds.

Examples of the carboxylic acid (iv) include monocarboxylic acid such as acetic acid, propionic acid, butyric acid, 2-ethylhexanoic acid, lauric acid, stearic acid, oleic acid, linoleic acid, linolenic acid, acrylic acid, methacrylic acid, monochloroacetic acid, dichloroacetic acid, trichloroacetic acid; polycarboxylic acid such as succinic acid, glutaric acid, adipic acid, azeleic acid, sebacic acid, decamethylene dicarboxylic acid, phthalic acid, maleic acid, trimellitic acid, pyromellitic acid, tetrahydrophthalic acid, hexahydrophthalic acid, methyl hexahydrophthalic acid, itaconic acid, methaconic acid, fumaric acid ; acrylic resins containing carboxyl groups and polyester resins containing carboxyl groups. Preferable examples of the carboxylic acid are monocarboxylic acids or polycarboxylic acids having lower molecular weight. More preferable examples of the carboxylic acid are monocarboxylic acids or polycarboxylic acids having molecular weight of not more than 3000.

Examples of the carboxylic acid anhydride compounds (iv) include low molecular weight carboxylic anhydride such as acetic anhydride, propionic anhydride, butyric anhydride, isobutyric anhydride, lauric anhydride, oleic anhydride, linoleic anhydride, stearic anhydride, linolenic anhydride, succinic anhydride, phthalic anhydride, maleic anhydride, trimellitic anhydride, pyromellitic anhydride, isovaleric anhydride, n - caproic anhydride, n - caprylic anhydride, n - capric anhydride, citraconic anhydride, gultaric anhydride, itaconic anhydride, crorendic anhydride, palmitic anhydride, myristic anhydride, tetrapropenyl succinic anhydride, tetrahrydophthalic anhydride, hexahydrophthalic anhydride, 4-methylhexahydrophthalic anhydride , endomethylenetetrahydrophthalic anhydride, methylendomethylenetetrahydrophthalic anhydride, tetrachlorophthalic anhydride, 3 - nitrophthalic anhydride , trichloroacetic anhydride, dichloroacetic anhydride, monochloroacetic anhydride, trifluoroacetic anhydride, heptafluorobutyric anhydride and polymers of carboxylic acid anhydride compounds such as acrylic resins containing acid anhydride groups and polyester resins containing acid anhydride groups. Preferable examples of the carboxylic acid anhydride are acetic anhydride, propionic anhydride, butyric anhydride, isobutyric anhydride, lauric anhydride, oleic anhydride, stearic anhydride, n-caproic anhydride, n-caprylic anhydride, n-capric anhydride, palmitic anhydride , myristic anhydride , trichloroacetic anhydride , dichloroacetic anhydride, monochloroacetic anhydride, trifluoroacetic anhydride and heptafluorobutyric anhydride.

The solubility of thermal latent acid catalyst (a) to organic solvents, which is effect of addition of the carboxylic acid compound and/or the carboxylic acid anhydride compound (iv), is excellent when the Lewis acid is a metal halide.

The carboxylic acid compound and/or the carboxylic acid anhydride compound (iv) may be utilized singly or as a combination of two or more kinds.

The amount of the components in the thermal latent acid catalyst (a) utilized is not particularly limited. The equivalent ratio of the epoxy group of the epoxy compound (i) and the sulfur atom of the compound having a sulfur atom (ii) to $M^1$ atom of the Lewis acid (iii) are each preferably in the range from 0.2 to 10, more preferably 0.5 to 5. When the equivalent ratio is less than 0.2, the activity of the Lewis acid may be sufficiently not inhibited in storage. When the equivalent ratio is more than 10, the activity of the Lewis acid may be inferior by heating.

The equivalent ratio of the carboxyl group of the carboxylic acid compound and/or the acid anhydride group of the carboxylic acid anhydride compound to $M^1$ atom of the Lewis acid (iii) is not particularly limited, but is preferably in the range from 0.05 to 10, more preferably 0.1 to 5. When the equivalent ratio is less than 0. 05, the solubility to organic solvents acid may be not sufficient. When the equivalent ratio is more than 10, the activity of the Lewis acid may be sufficiently not inhibited in storage.

The thermal latent acid catalyst (a) is easily prepared by mixing the epoxy compound (i), the compound having a sulfur atom (ii) and the Lewis acid (iii) in the presence of a solvent or without a solvent in optional order. It is preferable that after the mixture of the epoxy compound (i) and the compound having a sulfur atom (ii) is prepared, the thermal

latent acid catalyst (a) is prepared by mixing the Lewis acid (iii) into the mixture. Also, It is preferable that after the mixture of the compound having a sulfur atom (ii) and the Lewis acid (iii) is prepared, the thermal latent acid catalyst (a) is prepared by mixing the epoxy compound (i) into the mixture. The mixing order of the carboxylic acid compound and/or the carboxylic acid anhydride compound (iv) is optional. More preferable mixing order is at first mixing the epoxy compound (i), the compound having a sulfur atom (ii) and the Lewis acid (iii), and then, mixing the carboxylic acid compound and/or the carboxylic acid anhydride compound (iv) into the mixture. In the preparation of the thermal latent acid catalyst (a), it is preferable to heat at temperatures from room temperature to 100°C for 10 minutes through 10 hours, after mixing two components or three components, or optionally four components or five components. Because it may accelerate the thermal latent reaction.

Solvents utilized in the preparation of the thermal latent acid catalyst (a) include aliphatic hydrocarbon solvents, aromatic hydrocarbon solvents, ether solvents, alcohol solvents, ester solvents, ketone solvents and the mixture. The amount of the solvent is selected according to needs, but generally preferable to control the thermal latent acid catalyst (a) in the range from 1 to 90 % by weight.

The action for the thermal latent reaction of the epoxy compound (i) and the compound having a sulfur atom (ii) to the Lewis acid (iii) is complex, but it is, for example, presumed the mechanism that the thermal latent acid catalyst (a) manifest thermal latent property by protecting a vacant electron orbit of the Lewis acid (iii) with the both effects of a lone pair of an oxygen atom of the epoxy group and a lone pair of a sulfur atom of the compound having a sulfur atom (ii).

Further, it is, for example, presumed the mechanism that the thermal latent acid catalyst (a) manifest excellent solubility by changing a ligand of the thermal latent acid catalyst (a) or some of it with the reaction of the carboxylic acid compound and/or the carboxylic acid anhydride compound (iv).

Furthermore, it is presumed that the thermal latent acid catalyst (a) is decomposed by heating and regenerated to the Lewis acid. By the mechanism, the thermal latent acid catalyst shows the activity of the acid catalyst only by heating.

The thermal latent acid catalyst (a) which shows activity in the curing condition at an elevated temperature is used in the thermosetting clear-coat composition for the purpose of keeping excellent: storage stability of the composition for a long period of time, promoting the curing reaction when the composition is cured in a short time at a rather low temperature and giving excellent chemical properties and physical properties to the cured products. It is preferable that the thermal latent acid catalyst (a) is a compound which exhibit the activity at the temperatures above 50°C. If the thermal latent acid catalyst shows the catalytic activity under 50°C, the prepared thermosetting composition has undesirable properties, such as increase of viscosity and gelation during storage.

The catalytic activity temperature is easily controlled by changing the kind or the quantity of each components of the epoxy compound (i), the compound having a sulfur atom (ii) and the Lewis acid (iii), and optionally the carboxylic acid compound and/or the carboxylic acid anhydride compound (iv).

The thermal latent acid catalyst (a) may be utilized singly or as a combination of two or more kinds.

The amount of the thermal latent acid catalyst (a) in terms of the amount of the Lewis acid (iii) is selected in the range from 0.01 to 20 weight parts, preferably 0.02 to 10 weight part based on 100 weight parts of the total solid component which is the sum of the compound (A) and the compound (B).

When the amount of the Lewis acid (iii) in the thermosetting clear-coat composition is less than 0.01 weight parts, the promoting effect of the catalytic activity may be not sufficiently manifested because the amount is too little. When the amount is more than 20 weight parts, the promoting effect is lower than the value expected by the amount of the catalyst and the decrease in properties of the cured film may be caused by the presence of the catalyst in great quantities as residue in the cured film.

Another kind of the catalytic component (C) of the thermosetting coating composition for clear coat is a thermal latent acid catalyst (b) which comprises a compound having at least one selected from the group consisting of a nitrogen atom, an oxygen atom, a phosphorus atom and a sulfur atom (v) of formula (13) :

$$(R^{14})_{n3}\text{-}Y^2 \qquad (13)$$

wherein $Y^2$ is selected from the group consisting of a nitrogen atom, an oxygen atom, a phosphorus atom and a sulfur atom, $R^{14}$ is one or more of an organic group selected from the group consisting of an alkyl group, an alkenyl group, an aryl group, an alkaryl group and alkanol group, having 1 to 12 carbon atoms, two of $R^{14}$ may be bonded with each other to form a heterocyclic structure which comprises $Y^2$ as the hetero atom component, and n3 is 2 or 3 of an integer; a compound having a halogen atom (vi) of formula (14) :

$$R^{15}\text{-}X^{2} \qquad (14)$$

wherein $R^{15}$ is an organic group selected from the group consisting of a benzyl group, a substituted benzyl group, an allyl group, a substituted allyl group, a cycloalkyl group, a substituted cycloalkyl group, a secondary alkyl group, a substituted secondary alkyl group, a tertiary alkyl group and a substituted tertiary alkyl group, having 1 to 12 carbon atoms, and $X^2$ is a halogen atom ; and a Lewis acid having at least one selected from the group consisting of an aluminium atom, a zinc atom and a tin atom (vii) of formula (15) :

$$(X^{3})_{n4}\text{-}M^{2}\text{-}(R^{16})_{n5} \qquad (15)$$

wherein $M^2$ is selected from the group consisting of an aluminium atom, a zinc atom and a tin atom, $X^3$ is one or more of a halogen atom, $R^{16}$ is one or more of an organic group of 1 to 20 carbon atoms, $R^{16}$ may form a chelate ring by coordinating to $M^2$ atom, n4 and n5 are each 0 through 6 of an integer, and n4 plus n5 equals 1 through 6 of an integer.

The compound (v) is represented by formula (13). In the formula (13), preferable examples of $R^{14}$ are alkyl groups, alkenyl groups, aryl groups, alkaryl groups and alkanol groups, having 1 to 10 of carbon atoms. More preferable examples of $R^{14}$ are alkyl groups, aryl groups and alkaryl groups, having 1 to 10 of carbon atoms. The organic groups may have suitable substituents such as halogen atom, lower alkyl group, lower alkoxyl group, aryloxyl group, lower haloalkyl group, acyloxyl group, acylamino group, hydroxyl group, nitro group.

The compound (v) includes tertiary amines such as trimethylamine, triethylamine, tri-n-butylamine, triallylamine, dimethyl-n-octylamine, dimethylbenzylamine, triethanolamine, pyridine, 2-picoline, 3-picoline, 4-picoline, N-methylpyridine, N-methylpyrolidine, N-methylimidazole, N-methylmorpholine ; ethers such as diethylether, di-n-butylether, anisole, diphenylether, benzylethylether, dibenzylether, 1,4-dioxane, 1,3, 5-trioxane, furan, tetrahydrofuran, tetrahydropyran ; phosphines such as tributylphosphine, tricyclohexylphosphine, triphenylphosphine ; sulfides such as diethylsulfide, dipropylsulfide, di-n-butylsulfide, di-sec-butylsulfide, di-tert-butylsulfide, diisobutylsulfide, di-n-hexylsulfide, di-n - octylsulfide, methyl n - octylsulfide, 2,2'- thiodiethanol, bis (2-methoxyethyl) sulfide, 2-(ethylthio) ethanol, methyl methylthioacetate, ethyl methylthiopropionate, dimethyl thiodipropionate , thiodipropionitrile, thioanisole, diphenylsulfide, 1,4-thioxane, thiophene, tetrahydrothiophene, tetrahydrothiopyran.

The compounds (v) may be utilized singly or as a combination of two or more kinds.

The compound (vi) is represented by formula (14). In the formula (14), $R^{15}$ is an organic group selected from the group consisting of a benzyl group, an allyl group, a cycloalkyl group, a secondary alkyl group, a tertiary alkyl group and the groups substituted by one or more of suitable groups, having 1 to 12 carbon atoms, and $X^2$ is a halogen atom such as fluorine, chlorine, bromine and iodine.

Preferable examples of $R^{15}$ are benzyl groups, substituted benzyl groups, allyl groups, substituted allyl groups, cycloalkyl groups, substituted cycloalkyl groups, secondary alkyl groups, substituted secondary alkyl groups, tertiary alkyl groups and substituted tertiary alkyl groups, having 1 to 10 carbon atoms. More preferable examples of $R^{15}$ are benzyl groups, substituted benzyl groups, allyl groups, substituted allyl groups, cycloalkyl groups, substituted cycloalkyl groups, having 1 to 10 carbon atoms.

The substituents are not limited, but the examples include halogen atom, lower alkyl group, lower alkoxyl group, aryloxyl group, lower haloalkyl group, acyloxyl group, acylamino group, hydroxyl group, nitro group.

Examples of the compound (vi) include chlorine - containing compounds such as benzylchloride, 4-(tert-butyl) benzylchloride, 3-methoxybenzylchloride, 4 - methoxybenzylchloride, 2-methylbenzylchloride, 3-methylbenzylchloride, 4-methylbenzylchloride, 3-vinylbenzylchloride, 4-vinylbenzylchloride, 2-chlorobenzylchloride, 3-chlorobenzylchloride, 4-chlorobenzylchloride, 2-nitrobenzylchloride, 3-nitrobenzylchloride, 4-nitrobenzylchloride, 2,3-dichlorobenzylchloride, 2, 4 - dichlorobenzylchloride, 2,6 - dichlorobenzylchloride, 3,4-dichlorobenzylchloride, $\alpha,\alpha$ '-dichloroparaxylene, allylchloride, 1-chloro-2 - butene , 1 - chloro - 3 - methyl - 2 - butene , cyclobutylchloride, cyclopentylchloride, cyclohexylchloride, 2 - chlorocyclohexanol, 2-chlorocyclohexanone , isopropylchloride, sec - butylchloride , tert-butylchloride; bromine-containing compounds such as benzylbromide, 2-bromobenzylbromide, 3-bromobenzylbromide, 4-bromobenzylbromide, 2-nitrobenzylbromide, 3 - nitrobenzylbromide, 4 - nitrobenzylbromide, allylbromide, 1 - bromo - 2 - butene , 1 - bromo - 3 - methyl - 2 - butene , cyclobutylbromide, cyclopentylbromide, cyclohexylbromide, isopropylbromide, sec - butylbromide, tert - butylbromide ; iodine-containing compounds such as allyliodide, cyclohexyliodide, isopropyliodide, sec - butyliodide, tert - butyliodide ; and fluorine-containing compounds corresponding to the above compounds.

The compounds (vi) may be utilized singly or as a combination of two or more kinds.

The Lewis acid (vii) has an aluminium atom, a zinc atom or a tin atom and is a compound represented by formula (15).

$R^{16}$ are preferably organic groups having 1 to 18 carbon atoms, more preferably organic groups having 1 to 10 carbon atoms. Examples of the organic groups are alkyl groups, aryl groups, alkaryl groups, acyl groups, alkoxycarbonyl groups, alkoxyl groups, acyloxyl groups. Preferable examples of the organic groups are alkyl groups, acyl groups, alkoxyl groups and acyloxyl groups. The halogen atoms of $X^3$ are fluorine, chlorine, bromine or iodine.

The substituents are not limited, but the examples are halogen atom, lower alkyl group, lower alkoxyl group, aryloxyl group, lower haloalkyl group, acyloxyl group, acylamino group, hydroxyl group, nitro group.

The compound (vii) includes aluminium-containing compounds such as aluminium trifluoride , aluminium trichloride , aluminium tribromide , aluminium triiodide , trialkyl aluminium , dialkylhalogenated aluminium, monoalkylhalogenated aluminium, diisopropoxyethylacetoacetate aluminium , isopropoxybis (ethylacetoacetate) aluminium, tris (ethylacetoacetate) aluminium, acetylacetonato bis (ethylacetoacetate) aluminium, ethylacetoacetate bis (acetylacetonato) aluminium, tris (acetylacetonato) aluminium, tris (n-propylacetoacetate) aluminium, tris (n-butylacetoacetate) aluminium, tris ( propionylacetonato ) aluminium , acetylacetonato bis (propionylacetonato) aluminium, aluminium stearate ; zinc-containing compounds such as zinc fluoride, zinc chloride, zinc bromide, zinc iodide, bis (acetylacetonato) zinc, zinc naphthenate, zinc octanoate, zinc laurate, zinc stearate ; tin-containing compounds such as stannous fluoride, stannous chloride, stannic chloride, stannous bromide, stannic bromide, stannous iodide, tetraalkyl tin, dichloro bis (acetylacetonato) tin, dibutyl bis (acetylacetonato) tin, dibutyltin dilaurate, dioctyltin ester maleate, tin octanoate.

The compounds (vii) may be utilized singly or as a combination of two or more kinds.

The thermal latent acid catalyst (b) comprises the compound (v), the compound having a halogen atom (vi) and Lewis acid (vii), and is presumed to comprise a compound of the formula (16) or a mixture of the compounds.

$$[[(R^{14})_{n3}-Y^2-R^{15}]_s]^{s-}\ [(X^2)_s-\underset{\displaystyle (R^{16})_{n5}}{\underset{|}{M^2}}-(X^3)_{n4}]^{s-} \cdots\cdots (16)$$

wherein $M^2$, $X^2$, $X^3$, $Y^2$, $R^{14}$, $R^{15}$, $R^{16}$, n3, n4 and n5 are defined before and s is 1 through 3 of an integer.

That is, the thermal latent acid catalyst (b) is onium compound having an aluminium atom, a zinc atom or a tin atom in the anion. The compound does not manifest the catalytic activity at near room temperature, but is decomposed by heating and regenerate the Lewis acid having an aluminium atom, a zinc atom or a tin atom which manifest the catalytic activity.

In the decomposition, it is characterized that the thermal latent acid catalyst (b) forms carbocations such as a benzyl cation, an allyl cation, a secondary carbocation, a tertiary carbocation, which are comparatively stable. This is needed to decrease the decomposition temperature of the thermal latent acid catalyst (b) and to manifest the catalytic activity at lower temperatures. This means that the compound having a halogen atom (vi) is particularly limited as described above.

The amount of the components in the thermal latent acid catalyst (b) utilized is not particularly limited. The equivalent ratio of $Y^2$ atom of the compound (v) and $X^2$ atom of the compound (vi) to $M^2$ atom of the Lewis acid having an aluminium atom, a zinc atom or a tin atom (vii) are each preferably in the range from 0.5 to 10, more preferably 1 to 5.

The thermal latent acid catalyst (b) is easily prepared by mixing the compound (v), the compound (vi) and the Lewis acid (vii) in optional order. The mixing order may be simultaneous mixing of the components, or a mixing order that after the mixture of the compound (v) and the compound (vi) is prepared to form the onium compound of formula (17) having a halogen anion , the thermal latent acid catalyst (b) is prepared by mixing the Lewis acid (vii) into the mixture.

$$[(R^{14})_{n3}-Y^2-R^{15}]^+X^2 \qquad (17)$$

wherein $X^2$, $Y^2$, $R^{14}$ $R^{15}$ and n3 is defined before.

In the preparation of the thermal latent acid catalyst (b), it is preferable to heat at temperatures from room temperature to 100°C for 10 minutes through 10 hours, after mixing two components or three components. Because it may accelerate the thermal latent reaction.

The preparation of the thermal latent acid catalyst (b) may be conducted in the presence of a solvent or without a solvent.

Solvents utilized in the preparation of the thermal latent acid catalyst (b) include aliphatic hydrocarbon solvents, aromatic hydrocarbon solvents, ether solvents, alcohol solvents, ester solvents, ketone solvents and the mixture.

The amount of the solvent is selected according to needs, but generally preferable to control the thermal latent acid catalyst (b) in the range from 1 to 80 % by weight.

In the present invention, the thermal latent acid catalyst (b) which shows activity in the curing condition at an elevated temperature is used in the thermosetting clear-coat composition for the purpose of keeping excellent storage stability of the composition for a long period of time, promoting the curing reaction when the composition is cured in a short time at a rather low temperature and giving excellent chemical properties and physical properties to the cured products. It is preferable that the thermal latent acid catalyst (b) is a compound which exhibit the activity at the temperatures above 50 °C. If the thermal latent acid catalyst shows the catalytic activity under 50°C, the prepared thermosetting composition has undesirable properties, such as increase of viscosity and gelation during storage.

The catalytic activity temperature is easily controlled by changing the kind or the quantity of each components of the compound (v), the compound (vi) and the Lewis acid (vii).

The thermal latent acid catalyst (b) may be utilized singly or as a combination of two or more kinds.

Amount of the thermal latent acid catalyst (b) in terms of the amount of the Lewis acid (vii) is selected in the range from 0.01 to 20 weight parts, preferably 0.02 to 10 weight part based on 100 weight parts of the total solid component which is the sum of the compound (A) and the compound (B).

When the amount of the Lewis acid (vii) in the thermosetting clear-coat composition is less than 0.01 weight part, the promoting effect of the catalytic activity may be not sufficiently manifested because the amount is too little. When the amount is more than 20 weight part, the promoting effect is lower than the value expected by the amount of the catalysts and the decrease in properties of the cured film may be caused by the presence of the catalyst in great quantities as residue in the cured film.

The other kind of the catalytic component (C) of the thermosetting coating composition for clear coat is a mixture (c) comprising a metallic chelate compound (viii) and an organic silicon compound of formula (18) or a condensate thereof (ix) :

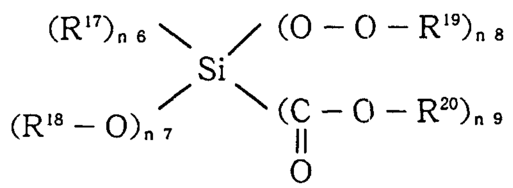

····· (18)

wherein $R^{17}$ is selected from the group consisting of an alkyl group, an aryl group and an alkenyl group, having 1 to 18 carbon atoms, $R^{18}$ is selected from the group consisting of a hydrogen atom, an alkyl group, an aryl group and an alkaryl group, having 1 to 18 carbon atoms, $R^{19}$ and $R^{20}$ are each selected from the group consisting of an alkyl group and an aryl group, having 1 to 18 carbon atoms, n6, n7, n8 and n9 are each 0 through 4 of an integer, and a total of n6, n7, n8 and n9 equals 4.

Examples of the metallic chelate compounds include aluminium chelate compounds such as diisopropoxyethylacetoacetatealuminium, tris (ethylacetoacetate) aluminium, isopropoxy • bis (ethylacetoacetate) aluminium, monoacetylacetonato • bis (ethylacetoacetate) aluminium, tris ( n - propylacetoacetate) aluminium , tris ( n - butylacetoacetate ) aluminium, monoethylacetoacetate • bis (acetylacetonato) aluminium, tris (acetylacetonato) aluminium, tris (propionylacetonato) aluminium, acetylacetonato •bis (propionylacetonato) aluminium ; titanium chelate compounds such as diisopropoxy· bis (ethylacetoacetate) titanium, diisopropoxy • bis (acetylacetonato) titanium ; zirconium chelate compounds such as tetrakis (n-propylacetoacetate) zirconium, tetrakis (acetylacetonato) zirconium, tetrakiss (ethylacetoacetate) zirconium ; dichloro•bis (acetylacetonato) tin, dibutyl•bis (acetylacetonato) tin, tris (acetylacetonato ) iron , tris ( acetylacetonato ) chromium , tris ( acetylacetonato ) rhodium , bis ( acetylacetonato) zinc , tris (acetylacetonato) cobalt.

Preferable examples of the metallic chelate compounds are aluminium chelate compounds such as diisopropoxyethylacetoacetatealuminium, tris ( ethylacetoacetate ) aluminium , isopropoxy • bis ( ethylacetoacetate ) aluminium , monoacetylacetonato • bis (ethylacetoacetate) aluminium , tris ( n-propylacetoacetate) aluminium, tris (n-butylacetoacetate) aluminium, monoethylacetoacetate • bis ( acetylacetonato ) aluminium , tris (acetylacetonato) aluminium, tris (propionylacetonato) aluminium, acetylacetonato•bis (propionylacetonato) aluminium ; zirconium chelate compounds such as tetrakis (n-propylacetoacetate) zirconium, tetrakis (acetylacetonato) zirconium, tetrakiss (ethylacetoacetate) zirconium.

The metallic chelate compounds (viii) may be utilized singly or as a combination of two or more kinds.

Another component in the mixture (c) is an organic silicon compound (ix) of formula (18) or a condensate thereof (ix).

In the formula (18), preferable $R^{17}$ is alkyl groups, aryl groups or alkenyl groups, having 1 to 10 carbon atoms

and preferable $R^{18}$ is a hydrogen atom, alkyl groups, aryl groups or alkaryl groups, having 1 to 10 carbon atoms and preferable $R^{19}$ and $R^{20}$ is alkyl groups or aryl groups, having 1 to 10 carbon atoms.

Examples of the organic silicon compounds or the condensates (ix) include triphenylsilanol, diphenylvinylsilanol, diphenylmethylsilanol, dimethylphenylsilanol, diphenylsilanediol , dimethylsilanediol, diphenyldimethoxysilane , diphenyldiethoxysilane , diphenyldiisopropoxysilane , triphenylmethoxysilane , triphenylethoxysilane , diphenylvinylethoxysilane , diphenyldimethoxycarbonylsilane, triphenylsilyl-2-nitrobenzylether, and one or more of the condensates of them ; silylperoxides such as trimethylsilyl-tert-butylperoxide, triphenylsilyl-tert-butylperoxide, tris (4-chlorophenyl) silyl-tert-butylperoxide, naphthyldiphenylsilyl-tert-butylperoxide , tri - 2 - naphthylsilyl-tert - butylperoxide, triphenylsilylcumenylperoxide, di (2-naphthyl) di (tert-butylperoxide) silane ; homopolymers or copolymers of α, β-unsaturated silane compounds such as acryloyloxypropyltrimethoxysilane, methacryloyloxypropyltrimethoxysilane, methacryloyloxypropyltri - n-butoxysilane ; and compounds containing a silanol group or alkoxysilane group such as hydrolyzates of the above compounds.

The organic silicon compounds or the condensates (ix) may be utilized singly or as a combination of two or more kinds.

The amount of the components in the mixture (c) utilized is not particularly limited. The equivalent ratio of silicon atom of the organic silicon compound or the condensate (ix) to the metallic atom of the metallic chelate compounds (viii) is preferably in the range from 0.2 to 10, more preferably 0.5 to 5.

The preparation of the catalytic mixture (c) may be conducted in the presence of a solvent or without a solvent.

Solvents utilized in the preparation of the mixture (c) include aliphatic hydrocarbon solvents, aromatic hydrocarbon solvents, ether solvents, alcohol solvents, ester solvents, ketone solvents and the mixture. The amount of the solvent is selected according to needs, but generally preferable to control the metallic chelate compound (viii) in the range from 0.1 to 80 % by weight.

In the curing condition at an elevated temperature, it is presumed that the metallic chelate compounds (viii) and the organic silicon compound or the condensate (ix) forms a complex compound and the complex compound manifests the catalytic activity. The complex compound manifests excellent acid catalytic activity compared with using the metallic chelate compound alone.

The mixture (c) is used in the thermosetting clear-coat composition for the purpose of keeping excellent storage stability of the composition for a long period of time, promoting the curing reaction when the composition is cured in a short time at a rather low temperature and giving excellent chemical properties and physical properties to the cured products. It is preferable that the mixture (c) exhibits the activity at the temperatures above 50°C. If the mixture shows the catalytic activity under 50°C, the prepared thermosetting composition has undesirable properties, such as increase of viscosity and gelation during storage.

The catalytic activity temperature is easily controlled by changing the kind or the quantity of each components of the metallic chelate compound (viii) and the organic silicon compound or the condensate (ix).

The mixture (c) may be utilized singly or as a combination of two or more kinds.

Amount of the mixture (c) in terms of the amount of the metallic chelate compound (viii) is selected in the range from 0.01 to 20 weight parts, preferably 0.02 to 10 weight part based on 100 weight parts of the total solid component which is the sum of the compound (A) and the compound (B).

In the thermosetting clear-coat composition, the mixing order of the metallic chelate compound (viii) and the organic silicon compound or the condensate (ix) into the thermosetting composition is not limited. The mixing order may be a mixing order that after the mixture of the metallic chelate compound (viii) and the organic silicon compound or the condensate (ix) are mixed to prepare the mixture (c), the mixture (c) is mixed into the compound (A) and the compound (B), or that the metallic chelate compound (viii) and the organic silicon compound or the condensate (ix) are respectively mixed into the compound (A) and the compound (B) to prepare the mixture in them.

Further, another thermosetting clear-coat composition for clear coat is a thermosetting clear-coat composition that an acid catalyst is used as the catalytic component (C) in the thermosetting clear-coat composition described above and essentially does not comprise an organic solvent as a diluent.

The acid catalyst utilized is indispensable in the thermosetting clear-coat composition to promote the curing reaction by heating and to give excellent chemical property and physical property to cured articles. The acid catalyst includes Bronsted acids, Lewis acids and the thermal latent components derived from them.

Bronsted acids are materials which dissociate proton and have acidic property.

Examples of the Bronsted acid are sulfuric acid, monoesters of sulfuric acid, sulfonic acids, phosphoric acid, monoesters and diesters of phosphoric acid, esters of polyphosphoric acid, monoesters and diesters of boric acid, carboxylic acids, halogenocarboxylic acids and, preferably, alkylbenzenesulfonic acids having 1 to 50 carbon atoms, such as p-toluenesulfonic acid, dodecylbenzenesulfonic acid, mono- or dihalogenocarboxylic acids having 1 to 50 carbon atoms, such as chloroacetic acid, dichloroacetic acid, alkyl monoesters and diesters of phosphoric acid having 1 to 50 carbon atoms, such as monomethyl phosphate, dimethy phosphate, compounds.

Examples of the Lewis acid include the same as described in the Lewis acid (iii).

The thermal latent components derived from Bronsted acids and Lewis acids are described above.

Preferable examples of the thermal latent components are boron compounds such as triethyl borate, boron trifluoride ; aluminium compounds such as trialkylaluminium, dialkylhalogenated aluminium, monoalkylhalogenated aluminium, halogenated aluminium, aluminium stearate ; zinc compounds such as zinc 2-ethylhexanoate, zinc stearate, zinc chloride, zinc bromide, tin compounds such as dibutyltin dilaurate, dibutyltin diacetate, dibutyltin acetylacetonate, dioctyltin diacetate, tin 2-ethylhexanoate, tin stearate, stannous chloride, stannic chloride, stannous bromide, stannic bromide ; titanium compounds such as titanium acetylacetonate, titanocene dichloride, titanium (IV) chloride ; zirconium compounds such as zirconium acetylacetonate, zirconocene dichloride, zirconium (IV) chloride ; benzylcation type Lewis acids ; and thermal latent compounds of the above compounds.

The acid catalysts may be utilized singly or as a combination of two or more kinds.

Amount of the acid catalyst is selected in the range from 0.01 to 20 weight parts, preferably 0.02 to 10 weight part based on 100 weight parts of the total solid component which is the sum of the compound (A) and the compound (B).

When the amount of the acid catalyst in the thermosetting composition is less than 0.01 weight part, the promoting effect of the catalytic activity may be not sufficiently manifested because the amount is too little. When the amount is more than 20 weight part, the promoting effect is lower than the value expected by the amount of the catalysts and the decrease in properties of the cured product may be caused by the presence of the catalyst in great Quantities as residue in the cured product.

The other curable clear-coat composition is a two component clear-coat composition for clear coat curable at lower temperatures which is prepared by mixing (I) a main material composition or a solution of the main material composition comprising the compound (A) and compound (B), and (II) an acid catalyst or a solution thereof comprising at least one kind selected from the group consisting of a Bronsted acid, a Lewis acid and a mixture of a metallic chelate compound and a compound having a silanol group.

In the preparation of the clear-coat composition curable at lower temperatures, the main material composition containing at least one compound selected from the group consisting of the compound (A) and the compound (B) as the essential ingredient or the solution of the main material composition is prepared.

Solvents utilized in the main material composition are not limited so long as the solvents can dissolve the materials and include conventional coating solvents, for example, aliphatic hydrocarbons such as n-hexane, n-heptane, n-octane, aromatic hydrocarbons such as benzene, toluene, xylene, halogenated hydrocarbons such as chloroform, carbon tetrachloride, alcohols such as methanol, ethanol, isopropanol, butanol, ethers such as dibutylether, tetrahydrofuran, dioxane , ketones such as acetone , methylethylketone , methylisobutylketone, esters such as ethyl acetate, n-propyl acetate, n-butyl acetate.

The solvents may be utilized singly or as a combination of two or more kinds.

Amount of the solvent is not limited and in general, selected in the range from 10 to 95 % by weight, preferably 30 to 80 % by weight.

The acid catalyst in the clear-coat composition is a Bronsted acid, a Lewis acid and a mixture of a metallic chelate compound and a compound having a silanol group. The acid catalyst may be utilized singly or as a combination of two or more kinds.

Examples and preferable examples of the Bronsted acid are the same as described before. The Bronsted acid may be utilized singly or as a combination of two or more kinds.

Examples of the Lewis acid include the same as described in the Lewis acid (iii). The Lewis acid may be utilized singly or as a combination of two or more kinds.

The mixture of a metallic chelate compound and a silanol compound can form a complex compound which manifest the catalytic activity. Therefor, the mixture can be utilized in the curable composition.

Examples of the metallic chelate compound are the same as described in the metallic chelate compound (viii). The metallic chelate compound may be utilized singly or as a combination of two or more kinds.

The silanol compound includes triphenylsilanol, diphenylvinylsilanol, diphenylmethylsilanol, dimethylphenylsilanol, diphenylsilanediol, dimethylsilanediol and one or more of condensates of them, compounds containing a silanol group which are hydrolyzates of homopolymers or copolymers of $\alpha,\beta$-unsaturated silane compounds such as acryloyloxypropyltrimethoxysilane , methacryloyloxypropyltrimethoxysilane, methacryloyloxypropyltri-n-butoxysilane. The compound having a silanol group may be utilized singly or as a combination of two or more kinds.

The amount of the components in the mixture is not particularly limited. The equivalent ratio of a silanol group of the compound having a silanol group to a metal atom of the metallic chelate compound is preferably in the range from 0.2 to 10, more preferably 0.5 to 5.

In the clear-coat compositions curable at lower temperatures, amount of the acid catalyst in terms of the amount of the Bronsted acid, the Lewis acid or the metallic chelate compound in the mixture of a metallic chelate compound and a silanol compound is selected in the range from 0.01 to 20 weight parts, preferably 0.02 to 10 weight part based on 100 weight parts of the total solid component which is the sum of the compound (A) and the compound (B).

It is desirable that the acid catalyst is added and mixed in the curable composition at just through 48 hours,

preferably just through 24 hours, before using the clear-coat composition curable at lower temperatures.

In the preparation of the clear-coat composition curable at lower temperatures, the acid catalyst may be added in the curable composition without other ingredients or after the solution containing the acid catalyst is prepared.

Solvents utilized in the solution of the acid catalyst are not limited so long as the solvents can dissolve the acid catalyst and include conventional coating solvents , for example, aliphatic hydrocarbons such as n-hexane, n-heptane, n-octane, aromatic hydrocarbons such as benzene , toluene , xylene, halogenated hydrocarbons such as chloroform, carbon tetrachloride, alcohols such as methanol, ethanol, isopropanol, butanol, ethers such as dibutylether, tetrahydrofuran, dioxane, ketones such as acetone, methylethylketone, methylisobutylketone, esters such as ethyl acetate, n-propyl acetate, n-butyl acetate. The solution prepared by mixing the solvent and water may be used as solvent.

The solvent may be utilized singly or as a combination of two or more kinds.

Amount of the acid catalyst in the solution is not limited, but in general, in the range from 1 to 95% by weight, preferably 2 to 60 % by weight.

The coating composition for clear coat curable at lower temperatures is prepared by mixing (I) the main material composition or the solution of the main material composition and (II) the acid catalyst or the solution of the acid catalyst.

In the method of film-forming comprising coating the curable base-coat composition on a surface of a substrate, and coating a curable clear-coat composition comprising a polyol-melamine type, wherein a polyol of the main resin is cured with an amino resin, and/or a polyol - melamine - polyisocyanate type , wherein a polyisocyanate compound or the blocked compound is used as a curing agent, on the base coat by a wet-on-wet coating technique, the curable base-coat composition of the present invention is effectively used as the curable base-coat composition.

The polyol of one component in the curable base-coat composition includes, for example, polymers having one or more hydroxyl groups such as an acrylic polyol and a polyester polyol. The amino resin of the other component in the curable base-coat composition includes an aminoplast resin. The aminoplast resin means the resin obtained by the dehydration-condensation of a compound containing an amino group or an amide group, such as melamine, benzoguanamine, urea, dicyane diamido and glycolurea, with formaldehyde in the presence of an alcohol such as methanol, ethanol, propanol, n-buthanol and isobutyl alcohol.

The mixing ratio of the polyol resin component and the aminoplast resin is suitable to be from 80 : 20 to 50 : 50, preferably from 70 : 30 to 60 40.

The polyisocyanate compound includes an aliphatic and alicyclic diisocyanate compound such as hexamethylene diisocyanate, trimethylhexamethylene diisocyanate, isophorone diisocyanate and 4,4'-diisocyanato dicyclohexyl methane, and a nurate compound, a biuret compound and an adduct compound thereof ; and a blocked isocyanate compound in which a isocyanate group of the compound mentioned above is blocked chemically with active methylene group, oxime, lactum, alcohol and phenol. The mixing ratio of the main resin component and the polyisocyanate compound used in the curable clear-coat composition is suitable to be from 1 0.7 to 0.7 : 1 based on a ratio of the hydroxyl group and the isocyanate group.

Such curable clear-coat compositions include acryl-melamine type, BELCOAT No.6200 ® (a product of NOF CORPORATION), an acrylfluorocarbon resin type, BELFLONE No.7200 ® (a product of NOF CORPORATION ) and an acryl - melamine - polyisocyanate type, FLOSHINE H3 ® (a product of NOF CORPORATION).

The curable clear-coat composition may be compounded without other ingredients or with additives such as coloring pigments, fillers, solvents, ultraviolet light absorbents, light stabilizer, antioxidants, flow controlling agent and other ingredients.

The curable clear-coat composition is prepared by compounding the above components and, according to needs, various additives. The addition method of the components and the additives is not limited and the mixing order and the addition order are not limited.

The curable clear-coat composition may be compounded, according to needs, with pigments, various additives or dyes having excellent weathering resistance in the amount to prevent transparency.

The pigments include various pigments of organic pigments and inorganic pigments. Examples of the pigment include surface treated metallic pigments such as aluminium, copper, brass, bronze, stainless steel, iron oxides of mica form, metallic powders of flake form and mica coated with titanium dioxide or iron oxides ; inorganic pigments such as titanium dioxide, iron oxides, yellow iron oxide and carbon black ; organic pigments such as phthalocyanine blue, phthalocyanine green and quinacridone red pigments; body pigments such as precipitated barium sulfate, clay, silica and tarc.

Kind of the substrate to which the coating is applied is not particularly limited, but various kinds of organic or inorganic substrate materials, such as woods, glasses, metals, fabrics, plastics, foamed articles, elastomers, papers, ceramics, concretes and gypsum boards, may be utilized. The substrates may be coated with one or more coating compositions.

The curable base-coat composition of the invention is preferably utilized in a method of film-forming which

comprising coating on the substrate with the curable base-coat composition and coating on the base coat with the curable clear-coat composition via a wet-on-wet technique.

The suitable method of film-forming with the thermosetting clear-coat composition includes a method which comprises controlling the desired viscosity of the curable base-coat composition by adding a suitable dilutent such as organic solvent, and then applying the coating composition on the substrate by conventional coating machines such as air spray, electrostatic air spray, roll coater, flow coater, dip type coating machine, brush, bar coater or applicator in an amount to form a film having dried thickness of 5 to 50 µm, preferably 10 to 30 µm, allowing to stand at room temperature to 100°C for 1 to 20 minutes, followed applying the thermosetting coating composition for the clear top coat comprising the thermosetting clear-coat composition on the base coat by the above method in an amount to form a film having dried thickness of 10 to 100 µ m, preferable 20 to 80 µm and heat curing, in general, in the condition of 50 to 300°C, preferably 100 to 180°C, for 5 seconds to 2 hour, preferably 5 to 90 minutes. Preferable method of the application is the application by an air spray in the above methods.

The suitable method of film - forming with the clear - coat composition comprising the two component composition curable at lower temperatures of the invention is the same method as described above. In this case, curing condition is generally to allow to stand at the temperature in the range of not less than 0°C and less than 50°C for 30 minutes to 10 days.

The two component curable composition may be cured at a temperature above 50°C for the purpose of accelerating the curing reaction and decreasing the curing time.

Coated articles prepared by the curable base-coat composition of the invention include structures, wood articles, metallic articles, plastics articles, rubber articles, finished papers, ceramic articles, glass articles, specifically automobiles, metal plates such as steel plates, two-wheel barrows, marine vessels, railway vehicles, airplanes, furnitures, musical instruments, house - hold electric instruments, building materials, vessels, office articles, sport articles, toys.

DESCRIPTION OF THE PREFERRED EMBODIMENTS

The invention will be understood more readily with reference to the following examples ; however, these examples are intended to illustrate the invention and are not to be construed to limit the scope of the invention.

Unless otherwise indicated, all parts and all percent (%) are by weight.

Preparation Example 1

One kind of the thermosetting clear-coat compositions was prepared.

(1) Preparation of the solution of the acid curing agent blocked chemically (A)

(i) Preparation of the solution of the polycarboxylic acid compound

Into a four-necked flask equipped with a thermometer, a reflux condenser, a stirrer and a dropping funnel, the following components were charged and the mixture was heated under stirring until the temperature reached to 120 °C.

| | |
|---|---|
| pentaerythritol | 136.0 weight parts |
| methyl isobutyl ketone | 538.7 weight parts |

To the mixture kept at 120°C, 672.0 weight parts of methylhexahydrophthalic anhydride was added by dropping for 2 hours and the mixture was kept stirring under heating until acid value of the mixture decreased to a value not more than 170. The acid value was measured by diluting the same sample 50 times by weight with a mixture of pyridine and water (pyridine/water = 9/1 (by weight)), heating for 30 minutes at 90°C and titrating with a standard solution of potassium hydroxide. Thus, the solution of a tetrafunctional polycarboxylic acid compound was prepared.

(ii) Preparation of the solution of the acid curing agent blocked chemically (A)

Into a flask of the same kind as the above, a mixture of the following composition including the solution of the polycarboxylic acid compound prepared above was charged and kept stirring at 50 °C.

| | |
|---|---|
| the solution of the polycarboxylic acid compound (1) | 336.7 |
| isobutyl vinyl ether | 120.2 |

(continued)

| | |
|---|---|
| hydrochloric acid, 35 weight % | 0.2 |
| methyl isobutyl ketone | 46.3 |
| (quantity in weight parts) | |

The reaction was finished when acid value of the mixture decreased to a value not more than 12 and the mixture was transferred to a separation funnel after cooling by standing. The reaction mixture was washed with 100 weight parts of alkaline water containing 10 weight % of sodium bicarbonate in the funnel and then washed with 300 weight parts of deionized water repeatedly until pH of the washing water became below 7. The organic layer was dried by adding Molecular Sieves ® 4A1/16 (a product of Wako Pure Chemical Industries Co., Ltd.) and standing for 3 days at the room temperature. The solution of the compound (A) thus prepared had 60.0 weight % of non-volatile matter and Gardener viscosity of E-F at 25°C.

(2) Preparation of the solution of acrylic resin having epoxy groups (B)

Into a four-necked flask equipped with a thermometer, a reflux condenser, a stirrer and a dropping funnel, 40.0 weight parts of solvent which was xylene was charged, heated under stirring and kept at 100 °C. On the other hand, a dropping component was prepared by mixing and dissolving 28.4 weight parts of glycidylmethacrylate, 20.0 weight parts of butylmethacrylate, 27.7 weight parts of methylmethacrylate, 23.9 weight parts of 2-ethylhexylacrylate and 2.0 weight parts of azo-bis-isobutyronitrile in 54.0 weight parts of n-butyl acetate.

The dropping component was added by dropping to the solvent at 100 °C at a constant rate for 2 hours. When the addition of the dropping component was finished, the mixture was kept at 100 °C for further 1 hour and then, an additional catalyst component prepared by dissolving 0.2 weight parts of azo-bis-isobutyronitrile in 3.8 weight parts of n-butyl acetate was added to the mixture. The mixture was kept at 100 °C for further 2 hours before finishing the reaction. Finally, the solution of acrylic resin having epoxy groups (B) was obtained.

The solution of the compound thus prepared had 50.8 weight % of non-volatile matter and Gardener viscosity of S at 25°C.

Non-volatile matter was measured by treating the sample in vacuo of 0.1 mmHg at 50°C for 3 hours. Gardener viscosity was measured by a Gardener viscometer according to Japanese Industrial Standard K 5400 (1990) 4.5.1.

(3) Preparation of the solution of thermal latent acid catalyst (C)

Methyl isobutyl ketone of 25.0 parts and ethylacetate of 25.0 parts were charged into a reactor of 300 ml and sufficiently mixed. And then, 20.1 parts of zinc octylate, 24.1 parts of di (2-ethylhexyl) sulfosuccinic acid and 5.8 parts of N-methyl morpholine were added into the mixture with stirring and the mixture was stood for 3 hours. The 50 % solution of thermal latent acid catalyst (C) was prepared.

(4) Preparation of the thermosetting clear-coat composition (D)

The solution of acrylic resin having epoxy groups (B) of 100 parts, the solution of acid curing agent blocked chemically (A) of 50 parts, the solution of thermal latent acid catalyst (C) of 4.3 parts, Modaflow ® of 0.1 parts, xylene of 3.0 parts and n-butylacetate of 0. 8 parts were charged into a vessel and sufficiently mixed. And then, the mixture prepared were diluted by a solvent of SOLVESSO # 100 ® (a product of Esso Co., aromatic petroleum naphtha) to the viscosity of 25 seconds at 20°C by Ford cup No.4 and the thermosetting clear-coat composition (D) was prepared.

Preparation example 2

The solutions of acrylic resin (E-1) to (E-5) were prepared as thermosetting base-coat composition.

Into a four-necked flask equipped with a thermometer, a reflux condenser, a stirrer and a dropping funnel, a mixed solvent consisting of xylene and propyleneglycol monoacetate shown in Table 1 was charged, and it was heated with stirring and kept in refluxing state. The mixture of the monomers and the polymerization initiator (dropping component) shown in Table 1 was added by dropping to the solvent under refluxing state at a constant rate for 1.5 hours. When the addition of the dropping component was finished, the mixture was kept at refluxing state for further 1.5 hour and then, cooled to 100°C. Further, the additional catalyst component shown in Table 1 was added to the mixture. The mixture was kept at 100 °C for 2 hours before finishing the reaction. Finally, the solutions of acrylic resin (E-1) to (E-5) were obtained.

Abbreviations and trade names used in Table 1 are listed in the following.

ARCOSOLVE PMA ® : a product of Kyowa Yuka Co. Ltd., propyleneglycol monomethylether acetate
GMA : glycidylmethacrylate
MMA : methylmethacrylate
BA : butylacrylate
ST : styrene
HEMA : 2-hydroxyethyl methacrylate
PLACCEL FM-2 ®: a product of Daicel Chemical Industries Co., Ltd., HEMA modified with 2 mol of ε -caprolactone
PLACCEL FM-4 ®: a product of Daicel Chemical Industries Co., Ltd., HEMA modified with 4 mol of ε -caprolactone
PERBUTYL Z ® : a product of NOF CORPORATION, radical polymerization initiator
PERBUTYL O ® : a product of NOF CORPORATION, radical polymerization initiator

Preparation example 3

Preparation of carbon black mill base composition (F)

The 133.4 parts of a melamine resin solution, UVAN 122 ® (a product of Mitsui Toatsu Chemicals, Inc.), 27.3 parts of xylene and 27.3 parts of propyleneglycol monoacetate were added to 12.0 parts of carbon black TS-6B ® (a product of Degusa Corporation). Pigment dispersion was carried out by MORTOR MILL 250 ® (a product of EAGER JAPAN CORPORATION) as a pigment dispersing machine for 30 minutes. Finally, the carbon black mill base composition (F) was obtained.

Preparation example 4

Preparation of solution of cellulose acetate butylate (G)

The 55 parts of ethylacetate was added to 20 parts of cellose-acetate - butylate CAB531 - 1 ® ( a product of EASTMAN CORPORATION) and sufficiently stirred and dissolved. Xylene of 25 parts was added to the solution. The solution of cellulose acetate butylate (G) was obtainded.

Preparation example 5

Preparation of solution of internal crosslinked resin particulates (H)

The 1.8 parts of RAPIZOLE B-90 ® (a product of NOF CORPORATION) as a surface active agent was added to 76.2 parts of ion-exchange water. The mixture was heat to 80°C under nitrogen current with stirring and RAPIZOLE B-90 ® was dissolved in the ion-exchange water. And then, 1.2 parts of the aqueous solution of 0.02 parts of potassium persulfate was added to the solution. After 5 minutes from the addition, a mixed monomer liquid consisting of 6. 0 parts of ethylacrylate, 2.3 parts of ethylene dimethacrylate and 1. 7 parts of divinylbenzene which formed a core portion of the internal crosslinked resin was dropped for 1.5 hours. The solution was kept for 30 minutes, and then a mixed monomer liquid consisting of 4.1 parts of ethylacrylate, 3.3 parts of ethylene dimethacrylate and 2.6 parts of hydoxypropyl methacrylate which formed a shell portion of the internal crosslinked resin was dropped for 1.5 hours.

On the other hand, after 1.0 hour from the dropping starting time of the mixed monomer liquid of the core portion, 1.2 parts of the aqueous solution of 0.02 parts of potassium persulfate was dropped in the solution for 2.5 hours together with the addition of the mixed monomer liquid. After the dropping of the mixed monomer liquid and the solution of potassium persulfate, the solution was stirred at 80°C for 2 hours under nitrogen current and the aqueous solution of internal crosslinked resin particulates was obtained.

After cooling, 2 parts of toluene, 38 parts of n-butanol and 10 parts of isopropanol were added to the aqueous solution one after another and 2.2 parts of 26 % sodium hydroxyde solution was added to the aqueous solution. The aqueous solution was refluxed for 2 hours. Further, 0.9 parts of 76 % formic acid aqueous solution was added and the mixture was stirred for 30 minutes. And then, 5 parts of isopropanol was added and the mixture was stood for 30 minutes. The water phase from the mixture was removed and 40 parts of ion-exchanged water was added to organic phase and the mixture was stirred for 30 minutes. Furthermore, 5 parts of isopropanol was added to the mixture and the mixture was stood for 30 minutes. Finally, the water phase from the mixture was removed.

The process described above was conducted again. And then, 40 parts of the solutions of acrylic resin (E-5) and 49 parts of methyl isobutyl ketone were added and the mixture was azeotropic-dehydrated to remove only the water phase until the boiling point of the mixture became more than 105°C. The solvent was removed by distillation

under reduced pressure from the mixture until the solid content was 30 percent and the solution of the internal crosslinked resin particulates (H) was obtained.

Preparation example 6

Preparation of solution of zinc octylate (I)

The 26 parts of butylacetate was added to 10 parts of zinc octylate (content of zinc : 18 %, a product of Nippon Chemical Industries Co., Ltd. ) and the mixture was stirred. The solution of zinc octylate (1) (zinc content : 5 %) was obtained.

Example 1 through 9

Preparation of thermosetting base-coat compositions

The components shown in Table 2 were weighed and charged in a vessel. The mixture was sufficiently mixed and the thermosetting base-coat compositions (J-1 to J-9) were obtained.
The components shown in Table 2 are listed in the following. carbon black mill base composition (F) : carbon black mill base composition (F) prepared in Preparation example 3, content of

melamine resin : 66.7 %
aluminium flake : a product of Showa Aluminium Co., Ltd., SAP561-PS ®
melamine resin : a product of Mitsui Toatsu Chemicals, Inc., UBAN 122 ®
isocyanate curing agent : a product of Nippon Polyurethane Kogyo Co., Ltd., CORONATE EA-60B ®
amide wax: a product of Kyoeisha Chemical Co., Ltd., FLOREN SH-290 ®

Example 10

Method of film-forming

Cationic electrodeposition coat comprising an epoxy resin was applied by electrodeposition to a dull steel plate treated with zinc phosphating in an amount to form a film having thickness of 20 μ m and the coated plate was baked at 170°C for 20 minutes. Intermediate coat EPICO No . 100 ® ( a product of NOF CORPORATION) was applied to the prepared plate in an amount to form a film having dried thickness of 40 μm and the plate was baked at 140°C for 20 minutes to obtain a base test piece.
The thermosetting base-coat composition (J-1) was diluted with toluene as a diluent to a viscosity required for spraying (15 seconds at 20°C by Ford cup No.4) and applied to the substrate prepared above by air spraying in an amount to form a film having dried thickness of 15 μm. After standing it for 3 minutes at room temperature, the thermosetting clear-coat composition (D) was applied on the base coat of the substrate prepared above by air spraying in an amount to form a film having dried thickness of 35 μm. After standing it for 10 minutes at room temperature, test piece was prepared by curing the coated piece at 140 °C for 20 minutes.
Eight tests of cured film properties described below were conducted to the obtained test piece. All the cured films had excellent film properties.
Results of the tests of cured film properties are shown in Table 3.
Properties of the cured film were evaluated by the following methods.

(1) Acid resistance 1

On a test piece, 2 ml of 40 weight % sulfuric acid was applied as spots and condition of the cured film was observed by visual comparison after standing for 48 hours at 20°C.

(2) Acid resistance 2

On a test piece, 2 ml of 40 weight % sulfuric acid was applied as spots and condition of the cured film was observed by visual comparison after heating for 30 minutes at 60°C.

(3) Acid resistance 3

On a test piece was immersed in 0.1N sulfuric acid for 24 hours at 60°C and the condition of cured film was observed by visual comparison.

(4) Weathering resistance

By using a weathering resistance tester of sunshine carbon arc lamp (Japanese Industrial Standard K-5400 (1990) 9.8.1), a test piece was exposed for 1000 or 3000 hours and 60 degree specular gloss (Japanese Industrial Standard K-5400 (1990) 7.6 60 degree specular gloss) of the cured film was measured. Condition of the cured film was observed by visual comparison or compared with the condition before the exposure by using the measured values of gloss.

(5) Adhesive property

By the cross cut tape test based on the method of Japanese Industrial Standard K-5400 (1990) 8.5.2, the adhesive property was evaluated.

(6) Knoop hardness

Measurement was made by using M type micro-hardnessmeter (manufactured by Shimadzu, Co., Ltd.). A larger value shows a higher hardness (ASTM D-1474).

(7) Boiling water resistance

A test piece was immersed in boiling water of 98 to 100°C for 3 hours, and then was stood at room temperature for 24 hours. The boiling water resistance was evaluated by measuring the adhesive property of the test piece according to the cross cut tape test based on the method of Japanese Industrial Standard K-5400 (1990) 8.5.2.

(8) Gasohole resistance

A test piece was immersed in a mixture of 10 parts of ethanol and 90 parts of lead-free gasoline by volume at 40°C for 1 hour. The surface change of the test piece was observed by visual comparison.

Example 11 through 17

By using thermosetting base-coat compositions (J-2) to (J-8) instead of the thermosetting base-coat composition (J-1) in Example 10, the cured films were prepared in the same method as Example 10.
Tests of cured film properties were conducted to the obtained test pieces. All the cured films had excellent film properties.
Results of the tests of cured film properties are shown in Table 3.

Example 18

Cationic electrodeposition coating comprising an epoxy resin was applied by electrodeposition to a dull steel plate treated with zinc phosphating in an amount to form a film having thickness of 20 μ m and the coated plate was baked at 170°C for 20 minutes. Intermediate coat EPICO No . 100 ® ( a product of NOF CORPORATION) was applied to the prepared plate in an amount to form a film having dried thickness of 40 μm and the plate was baked at 140°C for 20 minutes to obtain a substrate.
The thermosetting base-coat composition (J-1) was diluted with toluene as a diluent to a viscosity required for spraying (15 seconds at 20°C by Ford cup No.4) and applied to the substrate prepared above by air spraying in an amount to form a film having dried thickness of 15 μ m. After standing it for 3 minutes at room temperature, the curable clear-coat composition, BELCOAT No.6200 ® (a product of NOF CORPORATION, acrylic-melamine type) was applied on the base coat of the substrate prepared above by air spraying in an amount to form a film having dried thickness of 35 μ m. After standing it for 10 minutes at room temperature, test piece was prepared by curing the coated piece at 140 °C for 20 minutes.
Four tests of cured film properties described below were conducted to the obtained test piece. The cured film had excellent film properties.

Results of the tests of cured film properties are shown in Table 4.

(1) Weathering resistance

By using a weathering resistance tester of sunshine carbon arc lamp (Japanese Industrial Standard K-5400 (1990) 9.8.1), a test piece was exposed for 1000 or 3000 hours and 60 degree specular gloss (Japanese Industrial Standard K-5400 (1990) 7.6 60 degree specular gloss) of the cured film was measured. Condition of the cured film was observed by visual comparison or compared with the condition before the exposure by using the measured values of gloss.

(2) Adhesive property

By the cross cut tape test based on the method of Japanese Industrial Standard K-5400 (1990) 8.5.2, the adhesive property was evaluated.

(3) Moisture resistance

By the rotary method based on the method of Japanese Industrial Standard K-5400 (1990) 9.2.2, conditions of the cured film after testing and after leaving in test room for further 2 hours were observed by visual comparison.

(4) Chipping resistance

By using Diamond Shot machine (a product of Suga Test Machine Co., Ltd.) based on the Diamond Shot method described in Laid Open Japanese Patent Application Showa 56 - 67735, Diamond Shot Test was conducted in condition of diamond of 0.01 carat, temperature of - 20°C, shot speed of 210 ± 10 km/h and shot number of 30. The chipping resistance was evaluated by total area of peeled off portion of the cured films of 30 shots.

Example 19 through 25

By using thermosetting base-coat compositions (J-2) to (J-8) instead of the thermosetting base-coat composition (J-1) in Example 18, the cured films were prepared in the same method as Example 18.
Tests of cured film properties were conducted to the obtained test pieces. All the cured films had excellent film properties.
Results of the tests of cured film properties are shown in Table 4.

Comparative example 1

By using thermosetting base-coat compositions (J-9) instead of the thermosetting base-coat composition (J-1) in Example 10, the cured films were prepared in the same method as Example 10.
Tests of cured film properties were conducted to the obtained test piece. The cured film was peeled off at an interface of the base coat and the clear coat in both of boiling water resistance test and gasohole resistance test, because epoxy groups were not given in the resin component consisting of the polymer of an ethylenically unsaturated monomer in the thermosetting base-coat composition (J-9). Results of the tests of cured film properties are shown in Table 3.

Comparative example 2

By using thermosetting base-coat compositions (J-9) instead of the thermosetting base-coat composition (J-1) in Example 18, the cured films were prepared in the same method as Example 18.
Tests of cured film properties were conducted to the obtained test piece. The cured film was peeled off at an interface of the base coat and the clear coat in chipping resistance test, because epoxy groups were not given in the resin component consisting of the polymer of an ethylenically unsaturated monomer in the thermosetting base-coat composition (J-9).
Results of the tests of cured film properties are shown in Table 4.
To summarized the advantages obtained by the invention, the curable base-coat compositions of the invention give cured films having excellent cured film properties, because the curable base-coat compositions contain epoxy groups in the resin component consisting of the polymer of an ethylenically unsaturated monomer, and therefor, have adhesive active points to curable clear - coat compositions comprising the acid curing agents blocked chemically and

the resins containing epoxy groups or curable clear-coat compositions of the polyol-melamine type and/or the polyol-melamine-polyisocyanate type. The methods of film-forming of the invention easily give cured films and coated articles having various excellent film properties by coating the curable base - coat compositions in combination with curable clear-coat compositions via a wet-on-wet technique.

Table 1

| | E—1 | E—2 | E—3 | E—4 | E—5 |
|---|---|---|---|---|---|
| solvent | | | | | |
| xylene | 240 part | 240 part | 240 part | 240 part | 240 part |
| ARCOSOLV PMA | 60 part | 60 part | 60 part | 60 part | 60 part |
| mixture of monomers | | | | | |
| GMA | 50 part | 71 part | 71 part | 71 part | — |
| MMA | 248 part | 155 part | 159 part | 227 part | 258 part |
| BA | 55 part | 45 part | 50 part | 136 part | 63 part |
| ST | — | 50 part | — | — | — |
| HEMA | — | — | — | 65 part | 33 part |
| PLACCEL FM-2 | — | 179 part | — | — | — |
| PLACCEL FM-4 | 147 part | — | 220 part | — | 147 part |
| PERBUTYL Z | 1.5 part | 1.5 part | 1.5 part | 1.5 part | 1.5 part |
| additional catalyst | | | | | |
| xylene | 27.5 part | 27.5 part | 27.5 part | 27.5 part | 27.5 part |
| PERBUTYL O | 1 part | 1 part | 1 part | 1 part | 1 part |
| solvent | | | | | |
| xylene | 170 part | 170 part | 170 part | 170 part | 170 part |
| characteristic | | | | | |
| solid content (wt %) | 50.5 | 50.8 | 50.3 | 51.0 | 50.1 |
| weight average | 83000 | 76000 | 85000 | 58000 | 80000 |
| molecular weiht glass transition | 20°C | 20°C | 0°C | 30°C | 20°C |
| temperature | | | | | |
| resin epoxy equivalent | 1420 | 1000 | 1000 | 1000 | — |
| resin hydroxyl value | 28 | 56 | 42 | 56 | 56 |

Table 2

| Example | 1 | 2 | 3 | 4 | 5 | 6 | 7 | 8 | 9 |
|---|---|---|---|---|---|---|---|---|---|
| curable base-coat composition | J—1 | J—2 | J—3 | J—4 | J—5 | J—6 | J—7 | J—8 | J—9 |
| solution of an acrylic resin | | | | | | | | | |
| E—1 | 495 | 406 | 373 | — | — | — | — | — | — |
| E—2 | — | — | — | 426 | 213 | — | — | — | — |
| E—3 | — | — | — | — | — | 188 | — | — | — |
| E—4 | — | — | — | — | — | — | 187 | 257 | — |
| E—5 | — | — | — | — | 213 | 159 | 187 | 257 | 373 |

Table 2 (continued)

| Example | 1 | 2 | 3 | 4 | 5 | 6 | 7 | 8 | 9 |
|---|---|---|---|---|---|---|---|---|---|
| solution of an acrylic resin | | | | | | | | | |
| carbon black mill base composition (F) | 317 | 130 | — | 137 | 137 | — | — | — | — |
| aluminium flake | — | 25 | 50 | 25 | 25 | 50 | 50 | 50 | 50 |
| melamine resin | 10 | 96 | 167 | 100 | 100 | 169 | 167 | — | 167 |
| isocyanate curing agent | — | — | — | — | — | — | — | 84 | — |
| amide wax | — | — | 30 | — | — | — | 30 | 41 | 30 |
| solution of CAB (G) | — | 47 | 72 | — | — | — | 72 | 99 | 72 |
| solution of internal crosslinked resin particulates (H) | — | — | — | — | — | 96 | — | — | — |
| xylene | 113 | 189 | 178 | 203 | 203 | 208 | 177 | 129 | 178 |
| n-butyl acetate | — | 25 | 50 | 25 | 25 | 50 | 50 | 50 | 50 |
| n—butanol | 50 | 50 | 50 | 50 | 50 | 50 | 50 | — | 50 |
| solution of zinc octylate (I) | 15 | 32 | 30 | 34 | 34 | 30 | 30 | 33 | 30 |
| (unit : part) | | | | | | | | | |

Table 3

| Example | 10 | 11 | 12 | 13 | 14 | 15 | 16 | 17 | |
|---|---|---|---|---|---|---|---|---|---|
| Comparative example | | | | | | | | | 1 |
| curable base-coat composition | J—1 | J—2 | J—3 | J—4 | J—5 | J—6 | J—7 | J—8 | J—9 |
| clear-coat composition | thermosetting clear coating composition (D) | | | | | | | | |
| result of the cured film | | | | | | | | | |
| acid resistance—1 | non abnormal | non abnormal | non abnormal | non abnormal | non abnormal | non abnormal | non abnormal | non abnormal | non abnormal |
| acid resistance—2 | non abnormal | non abnormal | non abnormal | non abnormal | non abnormal | non abnormal | non abnormal | non abnormal | non abnormal |
| acid resistance—3 | non abnormal | non abnormal | non abnormal | non abnormal | non abnormal | non abnormal | non abnormal | non abnormal | non abnormal |
| weathering resistance | non abnormal | non abnormal | non abnormal | non abnormal | non abnormal | non abnormal | non abnormal | non abnormal | non abnormal |
| adhesive property | 10 | 10 | 10 | 10 | 10 | 10 | 10 | 10 | 10 |
| knoop hardness | 9.8 | 10.5 | 11.1 | 10.8 | 10.5 | 11.0 | 11.3 | 9.3 | 10.8 |
| boiling water resistance | 10 | 10 | 10 | 10 | 10 | 10 | 10 | 10 | 0 |
| gasohole resistance | non abnormal | non abnormal | non abnormal | non abnormal | non abnormal | non abnormal | non abnormal | non abnormal | peeling of clear coat |

Table 4

| Example | 18 | 19 | 20 | 21 | 22 | 23 | 24 | 25 | |
|---|---|---|---|---|---|---|---|---|---|
| Comparative example | | | | | | | | | 2 |
| curable base-coat composition | J-1 | J-2 | J-3 | J-4 | J-5 | J-6 | J-7 | J-8 | J-9 |
| clear-coat composition | BELCOAT No. 6200 ® (a product of NOF CORPORATION) | | | | | | | | |
| results of the cured film | | | | | | | | | |
| weathering resistance | | | | | | | | | |
| original gloss | 93 | 96 | 102 | 98 | 99 | 105 | 102 | 103 | 101 |
| gloss after 1000hr | 93 | 95 | 101 | 98 | 98 | 104 | 102 | 102 | 100 |
| visual | non abnormal | non abnormal | non abnormal | non abnormal | non abnormal | non abnormal | non abnormal | non abnormal | non abnormal |
| gloss after 3000hr | 92 | 93 | 99 | 97 | 97 | 102 | 101 | 100 | 97 |
| visual | non abnormal | non abnormal | non abnormal | non abnormal | non abnormal | non abnormal | non abnormal | non abnormal | non abnormal |
| adhesive property | 10 | 10 | 10 | 10 | 10 | 10 | 10 | 10 | 10 |
| moisture resistance | | | | | | | | | |
| after testing | non abnormal | non abnormal | non abnormal | non abnormal | non abnormal | non abnormal | non abnormal | non abnormal | non abnormal |
| after 2hr | non abnormal | non abnormal | non abnormal | non abnormal | non abnormal | non abnormal | non abnormal | non abnormal | non abnormal |
| chipping resistance ($mm^2$) | 8 | 7 | 7 | 5 | 5 | 6 | 8 | 9 | 13 |

**Claims**

1. A substrate coared by a base-coat and a clear coat, comprising a curable clear coat coated by a wet - on - wet technique on a curable base-coat, wherein the base coat comprises

(1) a resin component essentially consisting of a polymer of an ethylenically unsaturated monomer having 500 to 4,000 of an epoxy equivalent, 10 to 200 of a hydroxyl value, - 30 to 80 °C of a glass transition temperature and 3,000 to 150,000 of a weight average molecular weight.
(2) a curing agent having two or more functional groups in the molecule which can react with the hydroxyl groups of the resin component (1),
(3) a Lewis acid catalyst, and
(4) a pigment selected from the group consisting of a color pigment and a bright pigment

and the clear coat camprises an acid curing agent blocked chemically and a resin containing an epoxy group.

2. A substrare coared by a base-coar and a clear coat, comprising a curable clear coat coated by a wet - on - wet technique on a curable base-coat, wherein the base coar comprises

(1) a resin component essentially consisting of a polymer of an ethylenically unsaturated monomer having 500 to 4,000 of an epoxy equivalent, 10 to 200 of a hydroxyl value, - 30 to 80 °C of a glass transition temperature and 3,000 to 150,000 of a weight average molecular weight.
(2) a curing agent having two or more functional groups in the molecule which can react with the hydroxyl groups of the resin component (1),
(3) a Lewis acid catalyst, and
(4) a pigment selected from the group consisting of a color pigment and a bright pigment. and the clear coat is selected from a polyol melamine type composition, in which the polyol of a main resin is cured with an amino resin, and a polyol-melamine-polyisocyanate type, in which a polyisocyanate compound or a blocked compound thereof is used as a curing agent.

3. A method of film-forming which comprises :
coating the curable base-coat composition claimed in claim 1 on a substrate and coating a curable clear-coat composition comprising an acid curing agent blocked chemically and a resin containing an epoxy group on the base coat via a wet-on-wet technique.

4. A method of film-forming which comprises :

coating the curable base-coat composition claimed in claim 2 on a substrate and coating a curable clear-coat composition of a polyol-melamine type, in which a polyol of a main resin is cured with an amino resin, and/or a polyol-melamine-polyisocyanate type, in which a polyisocyanate compound or a blocked compound thereof is used as a curing agent, on the base coat via a wet-on-wet technique.

5. An article coated by the method of film-forming claimed in claim 3.

6. An article coated by the method of film-forming claimed in claim 4.

**Patentansprüche**

1. Substrat, das mit einer Grundierung und einem Klarlack beschichtet ist, umfassend einen vernetzbaren Klarlack, der mit einer Naß-auf-Naß-Technik auf eine vernetzbare Grundierung aufgetragen ist, wobei die Grundierung umfasst

(1) eine Harzkomponente, die im wesentlichen aus einem Polymer eines ethylenisch ungesättigten Monomers besteht und 500 bis 4.000 Epoxyäquivalente aufweist, einen Hydroxylwert von 10 bis 200 hat, eine Glasübergangstemperatur von -30 bis 80°C und eine massegemittelte Molekülmasse von 3.000 bis 150.000 aufweist,
(2) ein Vernetzungsmittel mit zwei oder mehr funktionellen Gruppen in dem Molekül, die mit den Hydroxylgruppen der Harzkomponente (1) reagieren können,

(3) einen Lewis-Säurekatalysator, und
(4) ein Pigment, das aus der Gruppe ausgewählt ist, die aus einem Farbpigment und einem Glanzpigment besteht;

und der Klarlack ein saures, chemisch blockiertes Vernetzungsmittel und ein Harz, das eine Epoxygruppe enthält, umfasst.

**2.** Substrat, das mit einer Grundierung und einem Klarlack beschichtet ist, umfassend einen vernetzbaren Klarlack, der mit einer Naß-auf-Naß-Technik auf eine vernetzbare Grundierung aufgetragen ist, wobei die Grundierung umfasst

(1) eine Harzkomponente, die im wesentlichen aus einem Polymer eines ethylenisch ungesättigten Monomers besteht und 500 bis 4.000 Epoxyäquivalente aufweist, einen Hydroxylwert von 10 bis 200 hat, eine Glasübergangstemperatur von -30 bis 80°C und eine massegemittelte Molekülmasse von 3.000 bis 150.000 aufweist,
(2) ein Vernetzungsmittel mit zwei oder mehr funktionellen Gruppen in dem Molekül, die mit den Hydroxylgruppen der Harzkomponente (1) reagieren können,
(3) einen Lewis-Säurekatalysator, und
(4) ein Pigment, das aus der Gruppe ausgewählt ist, die aus einem Farbpigment und einem Glanzpigment besteht;

und der Klarlack aus einer Zusammensetzung des Polyol-Melamin-Typs, bei dem das Polyol eines Hauptharzes mit einem Aminoharz vernetzt ist, und des Polyol-Melamin-Polyisocyanat-Typs ausgewählt ist, bei dem eine Polyisocyanatverbindung oder eine blockierte Verbindung davon als ein Vernetzungsmittel verwendet wird.

**3.** Verfahren zur Filmherstellung, das die folgenden Schritte umfasst:

Auftragen der vernetzbaren, in Anspruch 1 beanspruchten Grundierungszusammensetzung auf ein Substrat, und
Auftragen einer vernetzbaren Klarfackzusammensetzung, die ein saures, chemisch blockiertes Vernetzungsmittel und ein Harz umfasst, das eine Epoxygruppe enthält, auf die Grundierung mittels einer Naß-auf-Naß-Technik.

**4.** Verfahren zur Filmherstellung, welches die folgenden Schritte umfasst:

Auftragen der vernetzbaren, in Anspruch 2 beanspruchten Grundierungszusammensetzung auf ein Substrat, und
Auftragen einer vernetzbaren Klarlackzusammensetzung des Polyol-Melamin-Typs, bei dem das Polyol eines Hauptharzes mit einem Aminoharz vernetzt ist, und/oder eines Polyol-Melamin-Polyisocyanat-Typs, bei dem eine Polyisocyanatverbindung oder eine blockierte Verbindung davon als ein Vernetzungsmittel verwendet wird, auf die Grundierung mittels einer Naß-auf-Naß-Technik.

**5.** Gegenstand, beschichtet durch das Verfahren zur Filmherstellung gemäß Anspruch 3.

**6.** Gegenstand, beschichtet durch das Verfahren zur Filmherstellung gemäß Anspruch 4.

## Revendications

**1.** Substrat recouvert par un revêtement de base et par un revêtement transparent, comprenant un revêtement transparent durcissable déposé selon une technique humide sur humide sur un revêtement de base durcissable, dans lequel le revêtement de base comprend

(1) un composant résine constitué essentiellement d'un polymère d'un monomère éthyléniquement insaturé ayant un équivalent époxy compris entre 500 et 4 000, un indice d'hydroxy compris entre 10 et 200, une température de transition vitreuse comprise entre -30 et 80°C et une masse moléculaire moyenne en poids comprise entre 3 000 et 150 000,
(2) un agent de durcissement comportant au moins deux groupes fonctionnels dans la molécule, qui peuvent réagir avec les groupes hydroxy du composant résine (1),

(3) un catalyseur constitué par un acide de Lewis et
(4) un pigment choisi dans le groupe constitué par un pigment coloré et un pigment brillant

et le revêtement transparent comprend un agent de durcissement acide bloqué chimiquement et une résine contenant un groupe époxy.

**2.** Substrat recouvert par un revêtement de base et par un revêtement transparent, comprenant un revêtement transparent durcissable déposé selon une technique humide sur humide sur un revêtement de base durcissable, dans lequel le revêtement de base comprend

(1) un composant résine constitué essentiellement d'un polymère d'un monomère éthyléniquement insaturé ayant un équivalent époxy compris entre 500 et 4 000, un indice d'hydroxy compris entre 10 et 200, une température de transition vitreuse comprise entre -30 et 80°C et une masse moléculaire moyenne en poids comprise entre 3 000 et 150 000,
(2) un agent de durcissement comportant au moins deux groupes fonctionnels dans la molécule, qui peuvent réagir avec les groupes hydroxy du composant résine (1),
(3) un catalyseur constitué par un acide de Lewis et
(4) un pigment choisi dans le groupe constitué par un pigment coloré et un pigment brillant

et le revêtement transparent est choisi parmi une composition de type polyolmélamine, dans laquelle le polyol de la résine principale est durci par une résine aminée et une composition du type polyol-mélamine-polyisocyanate, dans laquelle on utilise en tant qu'agent de durcissement un composé polyisocyanate ou un de ses composés bloqués chimiquement.

**3.** Procédé de formation d'un film qui comprend:
le dépôt sur un substrat de la composition de revêtement de base durcissable revendiquée dans la revendication 1 et le dépôt, sur le revêtement de base selon une technique humide sur humide, d'une composition de revêtement transparent durcissable, comprenant un agent de durcissement acide bloqué chimiquement et une résine contenant un groupe époxy.

**4.** Procédé de formation d'un film qui comprend:
le dépôt sur un substrat de la composition de revêtement de base durcissable revendiquée dans la revendication 2 et le dépôt, sur le revêtement de base selon une technique humide sur humide, d'une composition de revêtement transparent durcissable du type polyol-mélamine, dans laquelle le polyol de la résine principale est durci par une résine aminée et/ou du type polyol-mélamine-polyisocyanate, dans laquelle on utilise en tant qu'agent de durcissement un composé polyisocyanate ou un de ses composés bloqués.

**5.** Article revêtu par le procédé de formation d'un film revendiqué dans la revendication 3.

**6.** Article revêtu par le procédé de formation d'un film revendiqué dans la revendication 4.